# EUROPEAN PATENT APPLICATION

(11) **EP 4 514 033 A1**
(43) Date of publication of application: **26.02.2025**
(21) Application number: 23802695.9
(22) Date of filing: 28.04.2023
(51) Int. Cl.: H04W 72/232, H04B 7/0452

(54) **MULTI-USER DATA TRANSMISSION METHOD AND APPARATUS**

(30) Priority: 08.05.2022 CN 202210495917; 08.07.2022 CN 202210799828
(71) Applicant: Huawei Technologies Co., Ltd., Shenzhen, Guangdong 518129 (CN)
(72) Inventor: QIN, Cheng, Shenzhen, Guangdong 518129 (CN); LI, Xueru, Shenzhen, Guangdong 518129 (CN); WANG, Sihai, Shenzhen, Guangdong 518129 (CN); YANG, Rui, Shenzhen, Guangdong 518129 (CN)
(74) Representative: Maiwald GmbH
(86) International application number: PCT/CN2023/091615
(87) International publication number: WO 2023/216923

(57) **Abstract**

Embodiments of this application provide a multi-user data transmission method and an apparatus. The method may include: A first terminal device sends first information to a network device, where the first information indicates a capability that is of the first terminal device to detect an interference signal and that is in multi-user multiple-input multiple-output pairing transmission. After the first terminal device sends the first information to the network device, the first terminal device receives first indication information from the network device, where the first indication information indicates data transmission information of a second terminal device. The first terminal device detects and eliminates the interference signal based on the first indication information. According to this application, the network device determines, based on the first information, that the capability of the first terminal device to detect the interference signal meets a preset condition, and sends the first indication information to the first terminal device. The first indication information is used by the first terminal device to detect and eliminate the interference signal, to ensure that the first terminal device can better detect and eliminate the interference signal.

## Description

This application claims priority to Chinese Patent Application No. 202210799828.2, filed with the China National Intellectual Property Administration on July 8, 2022 and entitled "MULTI-USER DATA TRANSMISSION METHOD AND APPARATUS", which is incorporated herein by reference in its entirety.

This application claims priority to Chinese Patent Application No. 202210495917.8, filed with the China National Intellectual Property Administration on May 8, 2022 and entitled "BASE STATION-ASSISTED MIMO DETECTION METHOD", which is incorporated herein by reference in its entirety.

### TECHNICAL FIELD

Embodiments of this application relate to the communication field, and more specifically, to a multi-user data transmission method and an apparatus.

### BACKGROUND

A multiple-input multiple-output (multiple-input multiple-output, MIMO) technology is a major breakthrough of a smart antenna technology in the field of wireless mobile communication. According to this technology, a capacity and spectrum utilization of a communication system can multiply without an increase in bandwidth, and multipath fading can be further reduced through multipath transmission, to effectively detect and eliminate channel interference, improve channel reliability, and reduce a bit error rate. The MIMO technology is a key technology used in a next generation mobile communication system. The MIMO technology has been widely applied to a plurality of wireless communication systems such as long term evolution (long term evolution, LTE) and new radio (new radio, NR).

To improve system spectral efficiency, in the wireless communication system, the MIMO technology is usually used, for example, a single-user multiple-input multiple-output (single-user multiple-input multiple-output, SU-MIMO) technology is used to perform multi-stream transmission for a single user, or a multi-user multiple-input multiple-output (multi-user multiple-input multiple-output, MU-MIMO) technology is used to schedule a plurality of users together. To eliminate inter-stream interference and inter-user interference in SU-MIMO or MU-MIMO, a high requirement is usually posed on precoding of a network device. The precoding of the network device needs to accurately match a channel, so that interference is low after transmission of a precoded signal is performed through a corresponding channel.

Because the precoding is usually determined based on measured channel information, when a user is in a moving state, a delay may exist between the measured channel information and channel information during actual transmission. As a result, the precoding cannot accurately match the channel. Especially in MU-MIMO transmission, interference may be increased sharply. Therefore, a multi-user data transmission method is urgently needed, to improve performance of detecting and eliminating an interference signal by a terminal device.

### SUMMARY

Embodiments of this application provide a multi-user data transmission method and an apparatus, to improve performance of detecting and eliminating an interference signal by a terminal device.

According to a first aspect, a multi-user data transmission method is provided. The method may be performed by a terminal device, or may be performed by a chip or a circuit disposed in the terminal device. This is not limited in this application. For ease of description, an example in which the method is performed by a first terminal device is used for description.

The method includes the following steps.

The first terminal device sends first information to a network device, where the first information indicates a capability that is of the first terminal device to detect an interference signal sent to a paired terminal device and that is in multi-user multiple-input multiple-output MU-MIMO pairing transmission. After the first terminal device sends the first information to the network device, the first terminal device receives first indication information from the network device, where the first indication information indicates data transmission information of a second terminal device, and the second terminal device is a terminal device paired with the first terminal device.

According to the method provided in embodiments of this application, after the first terminal device sends, to the network device, the first information indicating the capability of the first terminal device to detect the interference signal sent to the paired terminal device, the first terminal device receives the first indication information from the network device. The first indication information is used by the first terminal device to detect the interference signal sent to the paired terminal device. The first indication information further indicates the data transmission information of the terminal device (namely, the second terminal device) paired with the first terminal device. The network device determines, based on the first information, that the first terminal device has the capability of detecting the interference signal, and then sends the first indication information to the first terminal device, to avoid, when the first terminal device does not have the capability of detecting the interference signal, a waste of a related control channel resource and power consumption of the terminal device caused by a case in which the network device indicates the first terminal device to detect the interference signal, and the first terminal device cannot complete good interference detection and elimination.

It should be noted that the second terminal device may be one terminal device, or may be a plurality of terminal devices. This is not limited in this application.

With reference to the first aspect, in some possible implementations, when the first information meets a preset condition, the first terminal device receives the first indication information from the network device.

Based on the foregoing solution, when the capability of the first terminal device to detect the interference signal meets the preset condition, the network device sends the first indication information to the first terminal device. The preset condition may be negotiated by the network device and the first terminal device, may be specified in a protocol, or may be determined by the network device based on a condition. This is not limited in this application.

With reference to the first aspect, in some possible implementations, the first indication information is determined based on the first information.

With reference to the first aspect, in some possible implementations, the first terminal device detects a multi-user interference signal in the MU-MIMO pairing transmission based on the first indication information.

With reference to the first aspect, in some possible implementations, the first indication information is carried in a first downlink control information DCI field, and the method further includes: The first terminal device determines the first DCI field based on configuration information, where the configuration information includes the first DCI field and/or an identifier of the first DCI field.

Based on the foregoing solution, the configuration information includes the first DCI field determined by the network device and/or the identifier of the first DCI field. The first DCI field is an existing DCI field (that is, a DCI field specified in a protocol) used when the network device indicates the first terminal device. The first terminal device directly parses the first indication information in the existing DCI field based on the configuration information, to reduce resource overheads and reduce complexity of the first terminal device.

It should be understood that the configuration information may be sent by the network device to the first terminal device, or may be specified in a protocol.

With reference to the first aspect, in some possible implementations, the first terminal device receives the configuration information from the network device.

With reference to the first aspect, in some possible implementations, before that the first terminal device receives first indication information from the network device, the method further includes: The first terminal device sends second information to the network device, where the second information indicates a movement status of the first terminal device, and the movement status includes one or more of a speed, an acceleration, and a movement posture.

It should be understood that, before the first terminal device receives the first indication information, the first terminal device sends the second information to the network device. Alternatively, before the first terminal device receives the first indication information, after the first terminal device sends the first information to the network device, the first terminal device then sends the second information to the network device. This is not limited in this application.

It should be further understood that the first terminal device may send the second information to the network device based on a trigger condition that is of reporting the movement status and that is configured by the network device; or the first terminal device may periodically send the second information to the network device.

With reference to the first aspect, in some possible implementations, before that the first terminal device sends second information to the network device, the method further includes: The first terminal device receives second indication information from the network device, where the second indication information indicates the first terminal device to send the movement status of the first terminal device to the network device.

With reference to the first aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the first aspect, in some possible implementations, the first information includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the first aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

With reference to the first aspect, in some possible implementations, the configuration information further includes an AI network model, and input and output content and parameters of the AI network model.

For example, the configuration information further includes the input and output content and parameters of the AI network model. The input and output content and parameters of the AI network model include specific input and output content and input and output data sizes of the AI network model. For example, an input of the AI model is configured as a received signal, a pilot signal, or a reference signal, and an output is a result of signal detection. Alternatively, an input of the AI model is a matrix of received signals, a size of the matrix of the received signals is N* 1, an output is a result of signal detection, and a size of an output of the signal detection is N*T.

With reference to the first aspect, in some possible implementations, the first indication information includes at least one of the following: an antenna port of the second terminal device, a quantity of second terminal devices, a quantity of interference data streams of the second terminal device, a signal modulation scheme of the second terminal device, and a transmit power received by the second terminal device from the network device.

According to a second aspect, a multi-user transmission method is provided. The method may be performed by a network device, or may be performed by a chip or a circuit disposed in the network device. This is not limited in this application. For ease of description, an example in which the method is performed by the network device is used for description.

The method includes the following steps.

The network device receives first information from a first terminal device, where the first information indicates a capability that is of the first terminal device to detect an interference signal sent to a paired terminal device and that is in multi-user multiple-input multiple-output MU-MIMO pairing transmission. After that the network device receives the first information, the network device sends first indication information to the first terminal device, where the first indication information indicates data transmission information of a second terminal device, and the second terminal device is a terminal device paired with the first terminal device.

According to the method provided in embodiments of this application, the network device receives the first information from the first terminal device, where the first information indicates the capability that is of the first terminal device to detect the interference signal sent to the paired terminal device and that is in the multi-user multiple-input multiple-output MU-MIMO pairing transmission. The network device sends the first indication information to the first terminal device, where the first indication information is used by the first terminal device to detect the interference signal sent to the paired terminal device, and the first indication information further indicates the data transmission information of the terminal device (namely, the second terminal device) paired with the first terminal device. The network device determines, based on the first information, that the first terminal device has the capability of detecting the interference signal, and then sends the first indication information to the first terminal device, to avoid, when the first terminal device does not have the capability of detecting the interference signal, a waste of a related control channel resource and power consumption of the terminal device caused by a case in which the network device indicates the first terminal device to detect the interference signal, and the first terminal device cannot complete good interference detection and elimination.

It should be noted that the second terminal device may be one terminal device, or may be a plurality of terminal devices. This is not limited in this application.

With reference to the second aspect, in some possible implementations, when the first information meets a preset condition, the network device sends the first indication information to the first terminal device.

Based on the foregoing solution, when the capability of the first terminal device to detect the interference signal meets the preset condition, the network device sends the first indication information to the first terminal device. The preset condition may be negotiated by the network device and the first terminal device, may be specified in a protocol, or may be determined by the network device based on a condition. This is not limited in this application.

With reference to the second aspect, in some possible implementations, the first indication information is determined based on the first information.

With reference to the second aspect, in some possible implementations, the first indication information is carried in a first downlink control information DCI field, and the method further includes: The network device sends configuration information to the first terminal device, where the configuration information includes the first DCI field and/or an identifier of the first DCI field.

Based on the foregoing solution, the configuration information includes the first DCI field determined by the network device and/or the identifier of the first DCI field. The first DCI field is an existing DCI field (that is, a DCI field specified in a protocol) used when the network device indicates the first terminal device. The first terminal device directly parses the first indication information in the existing DCI field based on the configuration information, to reduce resource overheads and reduce complexity of the terminal device.

It should be understood that the configuration information may be sent by the network device to the first terminal device, or may be specified in a protocol.

With reference to the second aspect, in some possible implementations, before that the network device sends first indication information to the first terminal device, the method further includes: The network device receives second information from the first terminal device, where the second information indicates a movement status of the first terminal device, and the movement status includes one or more of a speed, an acceleration, a movement direction, and a movement posture.

It should be understood that, before the first terminal device receives the first indication information, the first terminal device sends the second information to the network device. Alternatively, before the first terminal device receives the first indication information, after the first terminal device sends the first information to the network device, the first terminal device then sends the second information to the network device. This is not limited in this application.

It should be further understood that the first terminal device may send the second information to the network device based on a trigger condition that is of reporting the movement status and that is configured by the network device; or the first terminal device may periodically send the second information to the network device.

With reference to the second aspect, in some possible implementations, before that the network device receives second information from the first terminal device, the method further includes: The network device sends second indication information to the first terminal device, where the second indication information indicates the first terminal device to send the movement status of the first terminal device to the network device.

With reference to the second aspect, in some possible implementations, before that the network device sends configuration information to the first terminal device, the method further includes: The network device determines that the second information meets a first condition.

With reference to the second aspect, in some possible implementations, the first condition includes at least one of the following:
a movement speed feature of the first terminal device meets a preset speed feature; and
a movement posture feature of the first terminal device meets a preset posture feature.

The movement speed feature includes a speed magnitude, a speed direction, an acceleration magnitude, and an acceleration direction.

With reference to the second aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the second aspect, in some possible implementations, the first information further includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the second aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

With reference to the second aspect, in some possible implementations, the configuration information further includes an AI model, and input and output content and parameters of the AI network model.

Optionally, the AI model is configured by the network device based on the first information.

For example, the configuration information further includes the input and output content and parameters of the AI network model. The input and output content and parameters of the AI network model include specific input and output content and input and output data sizes of the AI network model. For example, an input of the AI model is configured as a received signal, a pilot signal, or a reference signal, and an output is a result of signal detection. Alternatively, an input of the AI model is a matrix of received signals, a size of the matrix of the received signals is N* 1, an output is a result of signal detection, and a size of an output of the signal detection is N*T. With reference to the second aspect, in some possible implementations, the first indication information includes at least one of the following: an antenna port of the second terminal device, a quantity of second terminal devices, a quantity of interference data streams of the second terminal device, a signal modulation scheme of the second terminal device, and a transmit power received by the second terminal device from the network device.

According to a third aspect, a multi-user data transmission method is provided. The method may be performed by a terminal device, or may be performed by a chip or a circuit disposed in the terminal device. This is not limited in this application. For ease of description, an example in which the method is performed by a first terminal device is used for description.

The method includes the following steps.

The first terminal device sends first information to a network device, where the first information indicates a capability that is of the first terminal device to detect an interference signal sent to a paired terminal device and that is in multi-user multiple-input multiple-output MU-MIMO pairing transmission. When the first information meets a preset condition, the first terminal device receives first indication information from the network device, where the first indication information indicates data transmission information of a second terminal device, the second terminal device is a terminal device paired with the first terminal device, and the first indication information is determined based on the first information.

According to the method provided in embodiments of this application, the network device determines, based on the first information, that the first terminal device has the capability of detecting the interference signal, and sends the first indication information to the first terminal device, to avoid, when the first terminal device does not have the capability of detecting the interference signal, a waste of a related control channel resource and power consumption of the terminal device caused by a case in which the network device indicates the first terminal device to detect the interference signal, and the first terminal device cannot complete good interference detection and elimination.

With reference to the third aspect, in some possible implementations, the first indication information is carried in a first downlink control information DCI field, and the method further includes: The first terminal device determines the first DCI field based on configuration information, where the configuration information includes the first DCI field and/or an identifier of the first DCI field.

With reference to the third aspect, in some possible implementations, the first terminal device receives the configuration information from the network device.

With reference to the third aspect, in some possible implementations, before that the first terminal device receives first indication information from the network device, the method further includes: The first terminal device sends second information to the network device, where the second information indicates a movement status of the first terminal device, and the movement status includes one or more of a speed, an acceleration, and a movement posture.

It should be understood that, before the first terminal device receives the first indication information, the first terminal device sends the second information to the network device. Alternatively, before the first terminal device receives the first indication information, after the first terminal device sends the first information to the network device, the first terminal device then sends the second information to the network device. This is not limited in this application.

It should be further understood that the first terminal device may send the second information to the network device based on a trigger condition that is of reporting the movement status and that is configured by the network device; or the first terminal device may periodically send the second information to the network device.

With reference to the third aspect, in some possible implementations, before that the first terminal device sends second information to the network device, the method further includes: The first terminal device receives second indication information from the network device, where the second indication information indicates the first terminal device to send the movement status of the first terminal device to the network device.

With reference to the third aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the third aspect, in some possible implementations, the first information includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the third aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

With reference to the third aspect, in some possible implementations, the configuration information further includes an AI network model, and input and output content and parameters of the AI network model.

With reference to the third aspect, in some possible implementations, the first indication information includes at least one of the following: an antenna port of the second terminal device, a quantity of second terminal devices, a quantity of interference data streams of the second terminal device, a signal modulation scheme of the second terminal device, and a transmit power received by the second terminal device from the network device.

According to a fourth aspect, a multi-user transmission method is provided. The method may be performed by a network device, or may be performed by a chip or a circuit disposed in the network device. This is not limited in this application. For ease of description, an example in which the method is performed by the network device is used for description.

The method includes the following steps.

The network device receives first information from a first terminal device, where the first information indicates a capability that is of the first terminal device to detect an interference signal sent to a paired terminal device and that is in multi-user multiple-input multiple-output MU-MIMO pairing transmission. When the first information meets a preset condition, the network device sends first indication information to the first terminal device, where the first indication information indicates data transmission information of a second terminal device, and the second terminal device is a terminal device paired with the first terminal device.

According to the method provided in embodiments of this application, the network device determines, based on the first information, that the first terminal device has the capability of detecting the interference signal, and sends the first indication information to the first terminal device, to avoid, when the first terminal device does not have the capability of detecting the interference signal, a waste of a related control channel resource and power consumption of the terminal device caused by a case in which the network device indicates the first terminal device to detect the interference signal, and the first terminal device cannot complete good interference detection and elimination.

With reference to the fourth aspect, in some possible implementations, the first indication information is carried in a first downlink control information DCI field, and the method further includes: The network device sends configuration information to the first terminal device, where the configuration information includes the first DCI field and/or an identifier of the first DCI field.

Based on the foregoing solution, the configuration information includes the first DCI field determined by the network device and/or the identifier of the first DCI field. The first DCI field is an existing DCI field (that is, a DCI field specified in a protocol) used when the network device indicates the first terminal device. The first terminal device directly parses the first indication information in the existing DCI field based on the configuration information, to reduce resource overheads and reduce complexity of the terminal device.

With reference to the fourth aspect, in some possible implementations, before that the network device sends first indication information to the first terminal device, the method further includes: The network device receives second information from the first terminal device, where the second information indicates a movement status of the first terminal device, and the movement status includes one or more of a speed, an acceleration, a movement direction, and a movement posture.

It should be understood that, before the first terminal device receives the first indication information, the first terminal device sends the second information to the network device. Alternatively, before the first terminal device receives the first indication information, after the first terminal device sends the first information to the network device, the first terminal device then sends the second information to the network device. This is not limited in this application.

It should be further understood that the first terminal device may send the second information to the network device based on a trigger condition that is of reporting the movement status and that is configured by the network device; or the first terminal device may periodically send the second information to the network device.

With reference to the fourth aspect, in some possible implementations, before that the network device receives second information from the first terminal device, the method further includes: The network device sends second indication information to the first terminal device, where the second indication information indicates the first terminal device to send the movement status of the first terminal device to the network device.

With reference to the fourth aspect, in some possible implementations, before that the network device sends configuration information to the first terminal device, the method further includes: The network device determines that the second information meets a first condition.

With reference to the fourth aspect, in some possible implementations, the first condition includes at least one of the following:
a movement speed feature of the first terminal device meets a preset speed feature; and
a movement posture feature of the first terminal device meets a preset posture feature.

The movement speed feature includes a speed magnitude, a speed direction, an acceleration magnitude, and an acceleration direction.

With reference to the fourth aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the fourth aspect, in some possible implementations, the first information further includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the fourth aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

With reference to the fourth aspect, in some possible implementations, the configuration information further includes an AI model, and input and output content and parameters of the AI network model.

According to a fifth aspect, a multi-user data transmission apparatus is provided, where the multi-user data transmission apparatus includes: a transceiver unit, configured to send first information to a network device, where the first information indicates a capability that is of a first terminal device to detect an interference signal and that is in multi-user multiple-input multiple-output MU-MIMO pairing transmission. After the transceiver unit sends the first information to the network device, the transceiver unit is further configured to receive first indication information from the network device, where the first indication information indicates data transmission information of a second terminal device, and the second terminal device is a terminal device paired with the first terminal device.

With reference to the fifth aspect, in some possible implementations, when the first information meets a preset condition, the transceiver unit is further configured to receive the first indication information.

With reference to the fifth aspect, in some possible implementations, the first indication information is determined based on the first information.

With reference to the fifth aspect, in some possible implementations, the apparatus further includes: a processing unit, configured to detect a multi-user interference signal in the MU-MIMO pairing transmission based on the first indication information.

With reference to the fifth aspect, in some possible implementations, the first indication information is carried in a first downlink control information DCI field, and the processing unit is further configured to determine the first DCI field based on configuration information, where the configuration information includes the first DCI field and/or an identifier of the first DCI field.

With reference to the fifth aspect, in some possible implementations, the transceiver unit is further configured to receive the configuration information from the network device.

With reference to the fifth aspect, in some possible implementations, before the transceiver unit receives the first indication information from the network device, the transceiver unit is further configured to send second information to the network device, where the second information indicates a movement status of the first terminal device, and the movement status includes one or more of a speed, an acceleration, and a movement posture.

With reference to the fifth aspect, in some possible implementations, before the transceiver unit is configured to send the second information to the network device, the apparatus further includes:
the transceiver unit, further configured to receive second indication information from the network device, where the second indication information indicates the first terminal device to send the movement status of the first terminal device to the network device.

With reference to the fifth aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the fifth aspect, in some possible implementations, the first information includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the fifth aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, and a quantity of neural network layers of the AI model that are supported by the first terminal device.

With reference to the fifth aspect, in some possible implementations, the configuration information further includes an AI network model.

With reference to the fifth aspect, in some possible implementations, the first indication information includes at least one of the following: an antenna port of the second terminal device, a quantity of second terminal devices, a quantity of interference data streams of the second terminal device, a signal modulation scheme of the second terminal device, and a power received by the second terminal device from the network device.

According to a sixth aspect, a multi-user data transmission apparatus is provided, where the multi-user data transmission apparatus includes: a transceiver unit, configured to receive first information from a first terminal device, where the first information indicates a capability that is of the first terminal device to detect an interference signal and that is in multi-user multiple-input multiple-output MU-MIMO pairing transmission. After the transceiver unit is configured to receive the first information, the transceiver unit is further configured to send first indication information to the first terminal device, where the first indication information indicates data transmission information of a second terminal device, and the second terminal device is a terminal device paired with the first terminal device.

With reference to the sixth aspect, in some possible implementations, when the first information meets a preset condition, the transceiver unit is configured to send the first indication information to the first terminal device.

With reference to the sixth aspect, in some possible implementations, the first indication information is determined based on the first information.

With reference to the sixth aspect, in some possible implementations, the first indication information is carried in a first downlink control information DCI field, and the apparatus further includes: the processing unit is further configured send configuration information to the first terminal device, where the configuration information includes the first DCI field and/or an identifier of the first DCI field.

With reference to the sixth aspect, in some possible implementations, before the transceiver unit is configured to send the first indication information to the first terminal device, the apparatus further includes: the transceiver unit, further configured to receive second information from the first terminal device, where the second information indicates a movement status of the first terminal device, and the movement status includes one or more of a speed, an acceleration, a movement direction, and a movement posture.

With reference to the sixth aspect, in some possible implementations, before the transceiver unit is configured to receive the second information from the first terminal device, the apparatus further includes: the transceiver unit, further configured to send second indication information to the first terminal device, where the second indication information indicates the first terminal device to send the movement status of the first terminal device to the network device.

With reference to the sixth aspect, in some possible implementations, before the transceiver unit sends the configuration information to the first terminal device, the apparatus further includes: a processing unit, configured to determine that the second information meets a first condition.

With reference to the sixth aspect, in some possible implementations, the first condition includes at least one of the following:
a movement speed feature of the first terminal device meets a preset speed feature; and
a movement posture feature of the first terminal device meets a preset posture feature.

The movement speed feature includes a speed magnitude, a speed direction, an acceleration magnitude, and an acceleration direction.

With reference to the sixth aspect, in some possible implementations, the first information includes one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

With reference to the sixth aspect, in some possible implementations, the first information further includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

With reference to the sixth aspect, in some possible implementations, the first information includes one or more of the following: maximum complexity that is of an AI model and that is supported by the first terminal device, a storage upper limit that is of the AI model and that is supported by the first terminal device, an operator that is of the AI model and that is supported by the first terminal device, and a quantity of neural network layers of the AI model that are supported by the first terminal device.

With reference to the sixth aspect, in some possible implementations, the configuration information further includes an AI model, and the AI model is configured by the network device based on the first information.

With reference to the sixth aspect, in some possible implementations, the first indication information includes at least one of the following: an antenna port of the second terminal device, a quantity of second terminal devices, a quantity of interference data streams of the second terminal device, a signal modulation scheme of the second terminal device, and a transmit power received by the second terminal device from the network device.

According to a seventh aspect, a communication apparatus is provided, including: a processor. The processor is coupled to a memory, the memory is configured to store a program or instructions, and when the program or the instructions are executed by the processor, the communication apparatus is enabled to perform the method in any one of the first aspect or the second aspect and the possible implementations of the first aspect or the second aspect, or the communication apparatus is enabled to perform the method in any one of the third aspect or the fourth aspect and the possible implementations of the third aspect or the fourth aspect.

Optionally, there are one or more processors, and there are one or more memories.

Optionally, the memory may be integrated with the processor, or the memory may be disposed separately from the processor.

Optionally, a forwarding device further includes a transmitting machine (transmitter) and a receiving machine (receiver).

According to an eighth aspect, a communication system is provided, including: a first terminal device, configured to perform the method in any one of the first aspect and the possible implementations of the first aspect, or configured to perform the method in any one of the third aspect and the possible implementations of the third aspect; and a network device, configured to perform the method in any one of the second aspect and the possible implementations of the second aspect, or configured to perform the method in any one of the fourth aspect and the possible implementations of the fourth aspect.

According to a ninth aspect, a computer-readable medium is provided, where the computer-readable medium stores a computer program (which may also be referred to as code or instructions). When the computer program is run, a computer is enabled to perform the method in any possible implementation of the first aspect or the second aspect, or a computer is enabled to perform the method in any possible implementation of the third aspect or the fourth aspect.

According to a tenth aspect, a chip system is provided, including a memory and a processor, where the memory is configured to store a computer program, and the processor is configured to invoke the computer program from the memory and run the computer program, so that a communication device on which the chip system is installed performs the method in any one of the first aspect or the second aspect and the possible implementations of the first aspect or the second aspect, or a communication device on which the chip system is installed is enabled to perform the method in any one of the third aspect or the fourth aspect and the possible implementations of the third aspect or the fourth aspect.

The chip system may include an input chip or interface configured to send information or data, and an output chip or interface configured to receive information or data.

### BRIEF DESCRIPTION OF DRAWINGS

FIG. 1 is a diagram of a communication system to which this application is applicable;
FIG. 2 is a schematic flowchart of a multi-user data transmission method according to an embodiment of this application;
FIG. 3 is a schematic flowchart of another multi-user data transmission method according to an embodiment of this application;
FIG. 4 is a diagram of a UCI field according to an embodiment of this application;
FIG. 5 is a diagram of a MAC CE field according to an embodiment of this application;
FIG. 6 is a diagram of a data-driven AI model according to an embodiment of this application;
FIG. 7 is a diagram of a multi-module AI model according to an embodiment of this application;
FIG. 8 is a tree diagram of sphere decoding according to an embodiment of this application;
FIG. 9 is a block diagram of a multi-user data transmission apparatus 900 according to an embodiment of this application; and
FIG. 10 is a block diagram of another multi-user data transmission apparatus 1000 according to this application.

### DESCRIPTION OF EMBODIMENTS

The following describes technical solutions of embodiments of this application with reference to accompanying drawings.

The technical solutions of embodiments of this application may be applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

A terminal device in embodiments of this application may also be referred to as a user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or another processing device connected to a wireless modem, a vehicle-mounted device, a wearable device, a terminal device in a future 5G network, a terminal device in a future evolved public land mobile network (Public Land Mobile Network, PLMN), or the like. A specific form of the terminal device is not limited in embodiments of this application.

It should be understood that, in embodiments of this application, the terminal device may be an apparatus configured to implement a function of the terminal device, or may be an apparatus that can support the terminal device in implementing the function, for example, a chip system. The apparatus may be installed in the terminal. In embodiments of this application, the chip system may include a chip, or may include a chip and another discrete device.

A network device in embodiments of this application may be a device configured to communicate with the terminal device. The network device may be a network device (Base Transceiver Station, BTS) in the global system for mobile communications (Global System for Mobile communications, GSM) or the code division multiple access (Code Division Multiple Access, CDMA) system, a network device (NodeB, NB) in the wideband code division multiple access (Wideband Code Division Multiple Access, WCDMA) system, an evolved network device (Evolved NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in this application.

It should be understood that, in embodiments of this application, the network device may be an apparatus configured to implement a function of the network device, or may be an apparatus that can support the network device in implementing the function, for example, a chip system. The apparatus may be installed in the network device.

It should be further understood that, a specific structure of an entity for executing a method provided in embodiments of this application is not specifically limited in embodiments shown below, provided that a program that records code of the method provided in embodiments of this application can be run to perform communication according to the method provided in embodiments of this application. For example, the entity for executing the method provided in embodiments of this application may be a terminal device or a network device, or a functional module that is in the terminal device or the network device and that can invoke and execute the program.

In a wireless communication system (for example, 5G NR or 4G LTE), to improve system spectral efficiency, a MIMO technology is usually incorporated. For example, SU-MIMO is used to perform multi-stream transmission for a single user, or MU-MIMO is used to pair a plurality of terminal devices on a same time-frequency resource for simultaneous scheduling.

The network device may obtain channel precoding based on channel information that is fed back by the terminal device and that is obtained through, for example, channel state indicator (channel state indicator, CSI) feedback. Alternatively, channel information of a current downlink channel is obtained based on reciprocity between uplink and downlink channels, for example, based on a sounding reference signal (sounding reference signal, SRS) sent by the terminal device. The network device may determine precoding information in subsequent data transmission based on downlink channel information.

In an example, in an SU-MIMO scenario, the network device may perform singular value decomposition (singular value decomposition, SVD) based on a downlink channel matrix, and use an eigenvector as a precoding matrix, to eliminate inter-stream interference in a system.

In another example, in a MU-MIMO scenario, the network device may perform, based on downlink channel matrices of a plurality of terminal devices, precoding in a manner like zero forcing (zero forcing, ZF), to eliminate interference between the terminal devices.

In other words, MIMO performance is related to whether the precoding can match a channel. If the precoding matrix cannot well match the channel, an interference problem may be caused.

In a multi-user superposition transmission (multi-user superposition transmission, MUST) topic in LTE, a scenario in which the terminal devices reuse a same resource for transmission, and differentiation is performed by using different transmit powers, that is, a non-orthogonal multiple access (non-orthogonal multiple access, NOMA) scenario, is discussed. In this scenario, terminal devices in different geographical locations (mainly for far-end and near-end users) may be supported in reusing a same time-frequency resource, to improve spectral efficiency. Different from a MIMO scenario, in a NOMA scenario, terminal devices are differentiated in power domain. In the MU-MIMO, equal power allocation between MUs may be supported. In addition, in the MU-MIMO, UEs are mainly differentiated based on space. For example, different precoding is used, so that precoding between different UEs and a channel between wanted UEs are orthogonal to some extent.

Currently, LTE R13 supports pairing of two terminal devices for NOMA transmission. Because differentiation is performed in power domain, the network device needs to indicate, to a near-end terminal device, related information, including power information and modulation scheme information, about a far-end terminal device. Therefore, the near-end terminal device may demodulate data about the far-end terminal device in power domain, and eliminate an interference signal of the far-end terminal device by combining channel decoding and serial interference elimination. To support this mechanism, the network device may provide modulation scheme and transmit power information of a paired terminal device by using DCI signaling, to detect and eliminate an interference signal of the near-end terminal device.

It may be learned that in the NOMA scenario in power domain, only two terminal devices are supported. In addition, differentiation needs to be performed in power domain, in other words, a difference needs to exist between transmit powers. In addition, the foregoing solution further needs to be combined with serial interference elimination of channel decoding, and has high complexity.

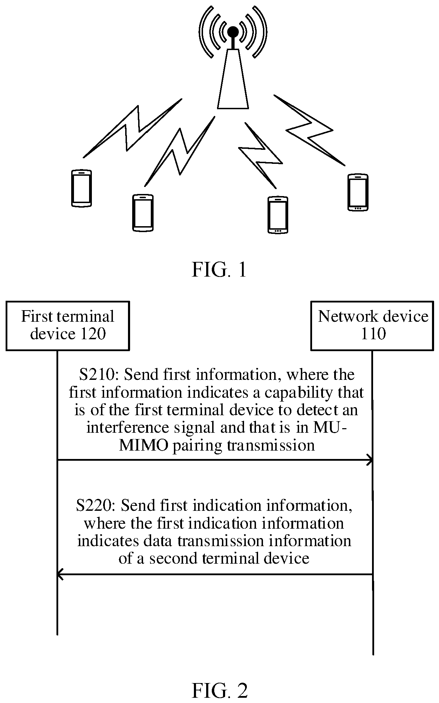

FIG. 1 is a diagram of a MU-MIMO system in a mobility scenario according to this application. In a scenario in which a terminal device moves, if the terminal device moves at a high speed, or an interval (for example, a CSI feedback periodicity or an SRS periodicity) at which a network device obtains channel information is long, the channel information used by the network device during channel precoding may expire. In other words, a channel obtained by the network device deviates greatly from a channel used during actual transmission. As a result, a precoding matrix used during the precoding performed by the network device cannot match a real channel. This problem is more evident in a MU-MIMO scenario. Because mismatching of the precoding and the channel may exist in a signal direction of the terminal device, interference between matched multi-user MUs may also be enhanced, and system performance may further deteriorate.

Usually, to eliminate interference between data streams and interference between users in an SU-MIMO or MU-MIMO scenario, especially in a case in which MU-MIMO users are close to each other, a system has a high requirement on the precoding of the network device, and needs to accurately match the precoding with a channel, so that interference is low after transmission of a precoded signal is performed through a corresponding channel.

In an LTE system or an NR system, MU-MIMO transmission is transparent to the terminal device. In a conventional technical solution, when a downlink control information (downlink control information, DCI) performs indication, only indication content related to transmission of the terminal device is indicated, and an indication of a paired terminal device is not specified. Therefore, the terminal device does not obtain related information about MUs paired with the terminal device in a case of MU-MIMO pairing transmission. For the terminal device, because the terminal device cannot obtain related information about the terminal device paired with the terminal device, it is unfavorable for the terminal device to detect and eliminate an interference signal.

Therefore, in the conventional technology, it is proposed that the related information about the paired MUs should be also indicated in the DCI. Specifically, scheduling information of a plurality of paired terminal devices is carried in one piece of DCI for indication by using DCI in a group form. These terminal devices share a same radio network temporary identifier (radio network temporary identifier, RNTI). In the indication of the group-DCI, modulation and coding scheme (modulation and coding scheme, MCS) information content of different terminal devices is indicated in different DCI fields, to help the terminal device detect and eliminate the interference signal.

In the conventional technology, a dedicated DCI format needs to be designed for related indication. In addition, each paired terminal device needs a dedicated field for indication. As a result, system signaling overheads are high. In addition, the terminal device needs to demodulate an additional dedicated DCI format. As a result, demodulation complexity of the terminal device increases. In addition, in the conventional technology, only how to indicate information during scheduling in a MU case is considered, and a problem related to a capability of the terminal device to detect the interference signal is not considered. For example, some terminal devices may not have a capability of detecting and eliminating an interference signal. In this case, even if the network device performs related indication on the terminal device, the terminal device cannot detect and eliminate the interference signal properly. As a result, a related control channel resource and power consumption of demodulating the DCI by the terminal device are wasted.

This application is mainly for MU-MIMO that is in the mobility scenario and in which a problem of large MU interference may be caused. Based on a problem existing in the conventional technology, a MIMO detection scheme combining a capability of a receiver is proposed. In addition, the network device determines first indication information based on the capability of the terminal device to detect the interference signal, and provides, for the terminal device, assistance information for detecting the interference signal, so that the terminal device can detect and eliminate the interference signal under a limitation of low complexity.

A MIMO detection algorithm used by the terminal device has a great impact on system performance. Typical MIMO receiving algorithms, such as minimum mean square error (minimum mean square error, MMSE) and MMSE-IRC algorithms, may not achieve satisfactory results in a scenario with severe interference. Another type of receiving algorithm is receiving based on a maximum likelihood detection algorithm. This type of algorithm may search within a possible symbol range, to determine a to-be-detected symbol. For a scenario with a low signal-to-noise ratio, effect may be limited. However, in an area with a high signal-to-noise ratio, or when interference exists between data streams is included, the effect is good. Complexity of maximum likelihood detection is high, and significantly increases especially as a quantity of transmission streams and a signal modulation order increase. Therefore, currently, there are also many simplified maximum likelihood algorithms. The simplified maximum likelihood detection algorithm, for example, a sphere decoding algorithm, may be implemented based on a breadth-first manner, a depth-first manner, or the like in tree search, so that system performance is still ensured when complexity is reduced.

In addition, as an artificial intelligence (artificial intelligence, AI) technology is gradually applied to wireless communication, AI for MIMO detection is gradually proposed. Generally, in comparison with a conventional algorithm, detection complexity may be reduced through AI detection. Application of AI in the MIMO detection may be driven by data. In other words, an AI network is trained completely based on training data. An output of the network is a detection result. A conventional method may alternatively be incorporated. In the conventional method, an intermediate result obtained through AI network training is inputted to assist the conventional method in obtaining a better result. This application is described in detail with reference to embodiments.

Without a loss of generality, interaction between the network device and the terminal device is used as an example below to describe in detail a multi-user data transmission method provided in embodiments of this application.

FIG. 2 is a block diagram of a multi-user data transmission method according to an embodiment of this application. The method includes steps S210 and S220.

S210: A first terminal device sends first information to a network device.

The first information indicates a capability that is of the first terminal device to detect an interference signal and that is in multi-user multiple-input multiple-output MU-MIMO pairing transmission.

Optionally, the first information may include one or more of the following: whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

Optionally, the first information may include one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

Optionally, the first information may include one or more of the following: maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

It should be understood that the first terminal device is triggered to send or periodically sends an interference detection capability, namely, the first information, of the first terminal device to the network device. The network device determines first indication information based on the first information reported by the first terminal device, where the first indication information indicates data transmission information of a second terminal device, and the second terminal device is a terminal device paired with the first terminal device. The first indication information is used by the first terminal device to detect the interference signal. In this application, when an algorithm for detecting and eliminating the interference signal by the first terminal device is considered, a demodulation operation generally needs to be performed on the interference signal, where complexity of demodulation of the interference signal is usually doubled in comparison with demodulation of a normal signal. For example, in likelihood detection, the complexity is positively correlated with a quantity of streams of interference signals that need to be detected and eliminated. Therefore, this application proposes that the terminal device should detect and eliminate the interference signal based on a detection capability of a receiver, to avoid introducing high complexity and power consumption to the terminal device in a process of detecting and eliminating the interference signal.

In an example, after the first terminal device accesses the network, the network device may directly or indirectly trigger reporting of the capability that is of the first terminal device to detect the interference signal and that is in the multi-user multiple-input multiple-output MU-MIMO pairing transmission. Triggering manners may include the following several types.
1. The first terminal device receives broadcast information of a cell, where the broadcast information may include capability information supported by a current network device. For example, a current cell is a special cell, and the cell may support interference elimination of the first terminal device.
2. The first terminal device receives capability query information of the network device, where the capability query information indicates the first terminal device to send, to the network device, a capability of the first terminal device to detect and eliminate the interference signal.
3. When the first terminal device expects to change interference detection capability content reported by the first terminal device, for example, when an interference detection capability needs to be reduced to reduce device power consumption or overheating, the first terminal device may initiate a capability change request to the network device, and report a new capability of detecting the interference signal.

It should be further understood that the terminal device may detect and eliminate the interference signal in MIMO in different manners. For example, the first terminal device detects and eliminates the interference signal by using a likelihood detection algorithm, where the likelihood detection algorithm includes a maximum likelihood (maximum likelihood, ML) algorithm or a simplified ML algorithm (for example, a manner of sphere decoding, QRD decoding, or best-first decoding). The first terminal device may detect and eliminate the interference signal by using an artificial intelligence AI detection method. In comparison with an advanced receiver, complexity of detecting the interference signal may be further reduced by the terminal device based on a powerful learning capability of an AI model. In addition, the first terminal device may further detect and eliminate the interference signal in a conventional manner like a minimum mean square error (minimum mean square error, MMSE) manner. In this embodiment of this application, an example in which the first terminal device detects and eliminates the interference signal based on the likelihood detection algorithm, the AI model, or the like is used for description. For detailed descriptions of detecting and eliminating the interference signal by the terminal device based on a manner like the MMSE algorithm, refer to the conventional technology. Details are not described in this embodiment of this application.

S220: After the first terminal device sends the first information to the network device, the network device sends the first indication information to the first terminal device. In other words, the first terminal device receives the first indication information from the network device.

The first indication information indicates the data transmission information of the second terminal device, and the second terminal device is the terminal device paired with the first terminal device.

Optionally, the first indication information may be further used by the first terminal device to detect the interference signal.

Optionally, the first indication information is determined based on the first information.

Specifically, after the network device receives the first information from the first terminal device, the network device determines, based on the first information, whether the capability of the first terminal device to detect the interference signal meets a preset condition. When the capability of the first terminal device to detect the interference signal meets the preset condition, the network device determines the first indication information, and sends the first indication information to the first terminal device. The first terminal device detects the interference signal based on the first indication information.

It should be understood that the preset condition may be determined by the network device according to a network protocol, may be determined by the network device and the first terminal device through information exchange, or may be determined by the network device. This is not limited in this application.

Optionally, the first indication information is carried in a first DCI field, and the first terminal device determines the first DCI field based on configuration information. The configuration information includes the first DCI field and/or an identifier of the first DCI field.

Optionally, the first terminal device receives the configuration information from the network device. In other words, the network device sends the configuration information to the first terminal device.

The configuration information includes the first DCI field determined by the network device and/or the identifier of the first DCI field. The first DCI field may be an existing DCI field. The configuration information indicates the first terminal device to parse the first indication information in the existing DCI field.

In an example, the configuration information includes the first DCI field, and the configuration information may be statically indicated by the network device. For example, in an RRC configuration (for example, a PDSCH-Config information element), the network device sends the configuration information to the first terminal device, to indicate that the first terminal device may obtain the first indication information through parsing in the first DCI field. In addition, the network device may also restore an original function of the first DCI field through RRC reconfiguration.

In another example, the configuration information includes temporary identification information (namely, an RNTI) of the first DCI field. For example, the network device configures different RNTIs, scrambles DCI by using a dedicated identifier RNTI when sending the first indication information, and scrambles the DCI by using a C-RNTI in another scenario. The first terminal device distinguishes, by using different identification information, meanings indicated by the current network device in the first DCI field.

It should be understood that the first indication information is sent in the existing DCI field or an existing DCI format (namely, the first DCI field). A specific implementation includes:
1. In the existing DCI format, a related DCI field is newly added, and the first indication information carried in the DCI field is used by the first terminal device to detect and eliminate the interference signal.
2. A reusing function is introduced into a DCI field in the existing DCI format. In other words, in a MU scenario, the reused DCI field is used by the first terminal device to detect and eliminate the interference signal, and the reused DCI field does not use a function of the field.
3. In a non-MU scenario or when the network device does not indicate the first terminal device to detect and eliminate the interference signal, the DCI field may use the function of the field.

The network device sends the configuration information to the first terminal device, where the configuration information indicates the first terminal device to parse the first indication information in the reused DCI field (the first DCI field).

It should be understood that the terminal device parses the first DCI field to obtain the first indication information, where the first indication information is determined by the network device based on the first information.

Optionally, the configuration information may further include an AI model, and content and a parameter of an input and/or an output of the AI model. The AI model is trained by the network device, or the AI model is obtained through joint training by the network device and the first terminal device.

Optionally, the network device determines that the first information does not meet the preset condition, and the network device determines that the first terminal device cannot detect and eliminate the interference signal. In other words, the network device does not send the first indication information to the first terminal device.

Optionally, the network device determines that the first information meets the preset condition, and the network device determines the first indication information based on the first information, and sends the first indication information to the first terminal device.

Optionally, the first indication information includes one or more of the following: an antenna port of the second terminal device, a quantity of second terminal devices, a quantity of interference data streams of the second terminal device, a signal modulation scheme of the second terminal device, and a transmit power received by the second terminal device from the network device.

In the solutions provided in this application, the first terminal device is triggered to send or periodically sends the first information to the network device, and the network device determines the first indication information based on the first information of the first terminal device. The first indication information is used by the first terminal device to detect and eliminate the interference signal. According to the technical solutions provided in embodiments of this application, a case in which when the first terminal device does not have the capability of detecting and eliminating the interference signal, the first terminal device cannot well detect and eliminate the interference signal even if the network device indicates the first terminal device to detect and eliminate the interference signal, and a resource of a related control channel is wasted is avoided. In addition, in the solutions provided in this application, the network device reuses the existing DCI field to indicate the first terminal device to parse the corresponding first indication information in the first DCI field, to reduce demodulation complexity of the first terminal device.

Optionally, in some embodiments, before the network device sends the first indication information to the first terminal device, the method shown in FIG. 2 may further include:
The first terminal device sends second information to the network device. In other words, the network device receives the second information from the first terminal device.

The second information indicates a movement status of the first terminal device, and the movement status includes one or more of a speed, an acceleration, and a movement posture.

It should be noted that the speed and the acceleration may be scalars or vectors. The movement speed includes a magnitude of the movement speed and/or a direction of the movement speed, and the acceleration includes a magnitude of the movement acceleration and/or a direction of the movement acceleration.

It should be understood that the second information may be sent in a medium access control control element (medium access control control element, MAC CE) or in uplink control information (Uplink Control Information, UCI), and carried in a physical layer channel (for example, a PUSCH or a PUCCH) for sending.

It should be understood that the first terminal device may send the second information to the network device based on a trigger condition that is of reporting the movement status and that is specified in a protocol.

In an example, the trigger condition may be that the first terminal device determines that a reporting periodicity meets a predefined periodicity, or a speed magnitude of the first terminal device exceeds a specific predefined threshold, and the first terminal device sends the second information to the network device.

It should be further understood that the first terminal device may send the second information to the network device based on a trigger condition that is of reporting the movement status and that is configured by the network device.

In an example, the trigger condition may be that the first terminal device determines that a reporting periodicity meets a periodicity configured by the network device, or a speed magnitude of the first terminal device exceeds a specific threshold, and the first terminal device sends the second information to the network device.

Optionally, before the first terminal device sends the second information to the network device, the method shown in FIG. 2 may further include:
The first terminal device receives second indication information from the network device, where the second indication information indicates the first terminal device to send the movement status of the first terminal device to the network device.

Optionally, the second indication information may include the trigger condition that is of reporting the movement status and that is configured by the network device.

Optionally, the second indication information may include a reporting manner that is of the second information and that is configured by the network device, for example, a configured MAC CE used for reporting, a configured format of reported UCI, and a configured time-frequency domain location of a physical resource used for reporting.

Optionally, the first terminal device reports the movement status of the first terminal device based on the movement status configured by the network device. The movement status may be determined based on an implementation algorithm of the movement status (for example, determined by using a sensor or a gyroscope, or determined based on a channel change status measured by a terminal).

It should be understood that if the network device determines that the second information meets a first condition, the network device determines to send the first indication information to the first terminal device.

The first condition includes one or more of the following:
a movement speed feature of the first terminal device meets a preset speed feature; and
a movement posture feature of the first terminal device meets a preset posture feature.

The movement speed feature includes one or more of a speed magnitude, a speed direction, an acceleration magnitude, and an acceleration direction.

In an example, the preset speed feature is that the speed magnitude of the first terminal device is greater than or equal to a first threshold. For example, the first threshold is 3 m/s. When a current speed magnitude of the first terminal device is 5 m/s, the network device sends the first indication information to the first terminal device. When a current speed magnitude of the first terminal device is 2 m/s, the network device does not send the first indication information to the first terminal device.

In another example, the preset speed feature is that the acceleration magnitude of the first terminal device is greater than or equal to a second threshold. For example, the second threshold is 2 m/s². When a current acceleration magnitude of the first terminal device is 3 m/s², the network device sends first configuration information to the first terminal device. When a current speed magnitude of the first terminal device is 0 m/s, the network device does not send first configuration information to the first terminal device.

In another example, the preset speed feature is the movement speed direction of the first terminal device. The direction may be a direction in a global coordinate system (that is, an absolute coordinate system, for example, a WGS84 coordinate system), and may be represented by using a three-dimensional vector (x, y, z). For example, when an included angle between a preset movement direction (x0, y0, z0) and a movement speed direction (x1, y2, z1) that is reported by the first terminal device is less than a preset value (for example, 10 degrees), the network device sends the first indication information to the first terminal device. When an included angle between a preset movement direction (x0, y0, z0) and a movement speed direction (x1, y2, z1) that is reported by the first terminal device is greater than a preset value (for example, 10 degrees), the network device does not send the first indication information to the first terminal device.

In another example, the preset posture feature is a posture location of the first terminal device in a global coordinate system (that is, an absolute coordinate system, for example, a WGS84 coordinate system), and may be represented by using a three-dimensional vector (x, y, z). When an included angle between a preset posture location (x0, y0, z0) and a posture location (x1, y2, z1) that is reported by the first terminal device is less than a preset value (for example, 10 degrees), the network device sends the first indication information to the first terminal device. When an included angle between a preset posture location (x0, y0, z0) and a posture location (x1, y2, z1) that is reported by the first terminal device is greater than a preset value (for example, 10 degrees), the network device does not send the first indication information to the first terminal device.

It should be understood that the first indication information of the network device may be further determined based on the second information, where status information that is of the first terminal device and that is indicated by the second information may be used to determine a related configuration of NW-MIMO transmission.

It should be noted that the network device may measure and estimate the movement status of the first terminal device by using a sounding reference signal (sounding reference signal, SRS). Alternatively, the network device may determine, based on a configuration periodicity status of an SRS or a CSI-reference signal (CSI-reference signal, CSI-RS), whether to send the first indication information to the first terminal device. When the network device determines that an SRS or CSI-RS periodicity of the first terminal device is short, the network device does not send the first indication information to the first terminal device.

In the solutions provided in this application, impact of the interference signal is particularly evident when MU interference exists in a high-mobility scenario. However, when mobility of the first terminal device is weak, interference is not severe. Therefore, the network device may determine, with reference to the movement status of the first terminal device, whether the first indication information needs to be subsequently sent to the first terminal device during MU pairing. If the movement speed of the first terminal device reaches or exceeds a threshold, the network device determines the first indication information based on the first information and the second information that are sent by the first terminal device, and sends the first indication information to the first terminal device. The first terminal device detects and eliminates the interference signal based on the first indication information.

In the method shown in FIG. 2, the first terminal device sends the first information to the network device, and the network device determines, based on the capability of the first terminal device to detect the interference signal, whether the first terminal device has the capability of detecting and eliminating the interference signal. When the first information of the first terminal device meets the preset condition, the first terminal device receives the first indication information from the network device, and the first terminal device detects and eliminates the interference signal based on the first indication information. In the technical solutions provided in embodiments of this application, the capability of the first terminal device to detect the interference signal in the multi-user multiple-input multiple-output MU-MIMO pairing transmission is considered. The network device sends the first indication information to the first terminal device, to avoid a case in which the first terminal device does not have the capability of detecting and eliminating the interference signal, and the first terminal device cannot well detect and eliminate the interference signal even if a related indication is sent, and improve performance of detecting and eliminating the interference signal by the first terminal device.

The first terminal device sends the first information to the network device, where the first information may include the capability of the first terminal device to detect the interference signal based on the receiver, and the receiver may be the AI model or the likelihood algorithm.

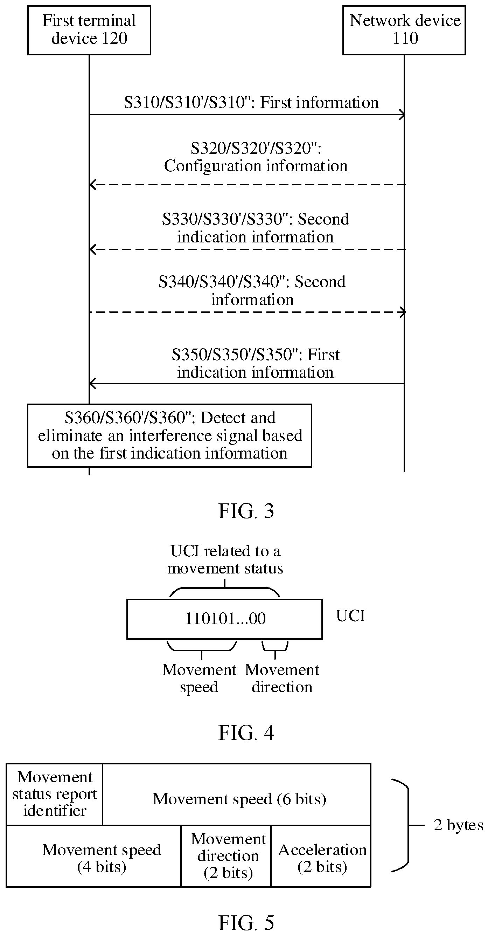

Next, FIG. 3 is a block diagram of another multi-user data transmission method according to an embodiment of this application. Examples are respectively used for detailed description for the following: A capability of a first terminal device to detect an interference signal is a capability of detecting the interference signal based on an AI model; and the capability of the first terminal device to detect the interference signal is a capability of detecting the interference signal based on a likelihood algorithm.

Example 1: The capability of the first terminal device to detect the interference signal is the capability of detecting the interference signal based on the AI model.

S310: The first terminal device sends first information to a network device.

Correspondingly, the network device receives the first information from the first terminal device.

The first information includes one or more of the following: whether the first terminal device supports interference detection that is based on the artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

It should be understood that when the first information includes that the first terminal supports the interference detection that is based on the artificial intelligence AI model, the network device performs a next operation based on a default limit of an interference detection capability of the AI model. The default limit may be predefined.

In an example, a maximum quantity of data streams (including a wanted data stream and an interference data stream) for performing MIMO detection by the first terminal device based on an AI network is six. For detection and elimination of the interference signal, detection and elimination of a maximum of four streams of interference data can be supported. In this case, the first terminal device may report a maximum quantity of all data streams and/or interference data streams whose detection is supported, for example, report that a maximum quantity of all data streams whose detection is supported is six, and a maximum quantity of interference streams whose detection is supported is four. When a quantity of data streams detected by the first terminal device based on the AI network is six streams of data, detection and elimination of a maximum of four streams of interference data are supported. After scheduling one stream of data for the first terminal device, the network device may further schedule a maximum of four streams of MU data for transmission. Alternatively, when the network device schedules four streams of wanted signals for transmission, because detection and elimination of a maximum of six streams of data are supported, in this case, the first terminal device can support detection and elimination of a maximum of two streams of interference data (as listed in Table 1).

**Table 1**

| Wanted data stream that is currently scheduled | Maximum quantity of detectable interference data streams |
|---|---|
| 1 | 4 |
| 2 | 4 |
| 3 | 3 |
| 4 | 2 |

In another example, the first terminal device reports a modulation order of detecting and eliminating the interference signal based on the AI network. The modulation order of interference whose detection and elimination are supported may be a specific set (for example, [qpsk, 16qam]). The set includes modulation orders of all interference data whose detection and elimination can be supported. Alternatively, the modulation order may be a supported maximum modulation order (for example, 16QAM). In this case, it indicates that a modulation order of interference whose detection and elimination are supported may be {BPSK, QPSK, 16QAM}. Alternatively, the modulation order may be an index of a set, and each set includes a supported modulation order. In addition, the first information may further indicate, for each interference data stream, an interference modulation order supported by the first information. For example, the first terminal device supports detection and elimination of a maximum of four streams of interference based on the AI network, where elimination of interference of two streams [qpsk] is supported, and elimination of interference of two streams [16qam, qpsk] is supported (as listed in Table 2).

**Table 2**

| Index | Modulation order of interference data whose detection and elimination are supported |
|---|---|
| 0 | All interference streams support QPSK detection |
| 1 | All interference streams support 16QAM detection |
| 2 | All interference streams support QPSK, and a maximum of two streams support 16QAM |

In another example, detection and elimination of the interference signal by the first terminal device based on the AI model may be a range of a signal-to-noise ratio (signal-to-noise ratio, SNR) or a signal-to-interference-plus-noise ratio (signal-to-interference-plus-noise ratio, SINR) of a supported wanted signal and interference signal. The first information may include a maximum value and a minimum value of an SNR or SINR range, or may include an index of an interval of an SNR or SINR value. The interval may be preset by the network device and the first terminal device, or may be a deviation value determined by using one SNR or SINR value as a reference interval (for example, an interval that deviates from the reference interval by several dB).

It should be noted that there are many manners in which the first terminal device sends the first information to the network device, and manners in which the network device obtains the first information are naturally different. For example, when a core network queries for a capability of the first terminal device to eliminate interference information, the first information is forwarded by a network element of the core network to the network device. In other words, when the network device queries for the capability of the first terminal device to eliminate the interference information, the network device may directly obtain the first information.

S320: The network device sends configuration information to the first terminal device. In other words, the first terminal device receives the configuration information from the network device.

The configuration information includes a first DCI field and/or an identifier of the first DCI field.

It should be understood that the first DCI field is an existing DCI field between the first terminal device and the network device. For example, the network device uses the existing DCI field in a static reusing manner.

In an example, a part of a TB indication field in DCI 1_1 is reused, so that the network device performs indication (that is, the part carries first indication information) of assistance information for the first terminal device. Currently, the TB indication field may be divided into two parts. In a MU-MIMO scenario, a quantity of streams paired by the first terminal device is generally not extremely large. Therefore, only one TB may be used, and a TB2 indication field is not activated. In an existing technical solution, the TB2 field does not carry any bit information. However, in this embodiment of this application, the idle field TB2 is used to carry the first indication information.

It should be understood that the TB2 field has an original function. Therefore, the network device needs to notify the first terminal device in advance that the TB2 field is used to carry the first indication information, instead of the original function. Specifically, in an RRC configuration process, the network device adds a related information element of an interference information assistance function. The information element may be included in a related RRC configuration information element (for example, PDSCH-Config) for downlink data transmission. When a value of the information element is True, it indicates that MU transmission is used in a specific time period subsequently specified in a protocol, and the TB2 field in the DCI indicates interference assistance information (the first indication information) instead of the original function. When a source is False, it indicates that the TB2 field does not indicate interference assistance information (that is, the first indication information) in a time period subsequently specified in a protocol. If the TB2 field has content, the content is normal transmission information. In addition, the information element may have a default value, for example, False.

In an example, Table 3 is an example in which the DCI field is reused to indicate a quantity of interference signals of the first terminal device and an interference modulation scheme.

**Table 3**

| The TB2 bit field is reused to indicate interference | Quantity of interference signals and interference modulation scheme |
|---|---|
| 0 | SU-MIMO |
| 1 | MU 1 BPSK |
| ... | ... |
| 155 | MU 1 256QAM, MU 2 256QAM, and MU 3 256QAM |
| 156 to 255 | Reserved |

As shown in Table 3, when the reused TB2 field is 0, the SU-MIMO is currently used. In other words, the first terminal device does not perform MU-MIMO pairing transmission. When the reused TB2 field is 1, it indicates that there is currently one paired device, and data about the paired device is modulated by using the BPSK. When the reused field is 155, it indicates that there are currently three paired devices, and data about the paired devices is modulated by using the 256QAM.

In another example, Table 4 is an example in which the DCI field is reused to indicate an interference antenna port of the first terminal device and an interference modulation scheme.

**Table 4**

| The TB2 bit field is reused to indicate interference | Interference port and interference stream modulation scheme |
|---|---|
| 0 | SU-MIMO |
| 1 | Interference port 1 BPSK |
| ... | ... |
| 155 | Interference port 1 256QAM, interference port 2 256QAM, and interference port 3 256QAM |
| 156 to 255 | Reserved |

As shown in Table 4, when the reused TB2 field is 0, the SU-MIMO is currently used. In other words, the first terminal device does not perform MU-MIMO pairing transmission. When the reused TB2 field is 1, it indicates that one interference port is sending interference data currently, and the interference data is modulated by using the BPSK. When the reused field is 155, it indicates that three interference ports are sending data currently, and data about the interference data is modulated by using the 256QAM.

In another example, Table 5 is an example in which the DCI field is reused to indicate a quantity of streams of interference signals of the first terminal device, an interference data transmit power, and an interference modulation scheme. The transmit power represents a deviation from a data transmit power of the first terminal device.

**Table 5**

| The TB2 bit field is reused to indicate interference | Quantity of streams of interference signals, transmit power, and interference stream modulation scheme |
|---|---|
| 0 | SU-MIMO |
| 1 | MU layer 1 BPSK, and 0 dB |
| ... | ... |
| 155 | MU layer 1 256QAM, and 0 dB |
| | MU layer 2 256QAM, and 1 dB |
| | MU layer 3 256QAM, and 3 dB |

As shown in Table 5, when the reused TB2 field is 0, the SU-MIMO is currently used. In other words, the first terminal device does not perform MU-MIMO pairing transmission. When the reused TB2 field is 1, it indicates that there is one interference data stream currently, the interference data stream is modulated by using the BPSK, and a deviation of a transmit power of the interference data stream from the data transmit power of the first terminal device is 0 dB (that is, the transmit power of the interference data stream is equal to the data transmit power of the first terminal device). When the reused field is 155, it indicates that there are currently three interference data streams, these interference data streams are modulated by using the 256QAM. A deviation of a transmit power of a first interference stream from the data transmit power of the first terminal device is 0 dB (that is, the transmit power of the first interference stream is equal to the data transmit power of the first terminal device). A deviation of a transmit power of a second interference stream from the data transmit power of the first terminal device is 1 dB (that is, the transmit power of the second interference stream is 1 dB higher than the data transmit power of the first terminal device). A deviation of a transmit power of a third interference stream from the data transmit power of the first terminal device is 3 dB (that is, the transmit power of the third interference stream is 3 dB higher than the data transmit power of the first terminal device).

Table 3, Table 4, and Table 5 are merely examples. It is clear that there may be a combination of various other information. This is not limited in this application.

After the network device receives the first information from the first terminal device, the network device determines, based on the capability that is in the first information and that is of the first terminal device to detect the interference signal, whether to configure, for the terminal device, configuration information of an indication of interference elimination.

Optionally, the configuration information may be determined by the network device based on the first information. When determining that the capability of the first terminal device to detect the interference signal does not meet a preset condition, the network device may not configure, for the first terminal device, related indication information (for example, the first indication information) of detecting and eliminating the interference signal. In other words, the network device may not send the configuration information to the first terminal device. When determining that the capability of the first terminal device to detect the interference signal meets a preset condition, the network device sends the configuration information to the first terminal device, and includes the first indication information in the first DCI field indicated by the configuration information, to send the first indication information to the first terminal device. The first indication information is used by the first terminal device to detect and eliminate the interference signal.

It should be understood that when the network device obtains the first information of the first terminal device, the network device determines whether to configure, for the first terminal device, the related configuration information. For example, after receiving the first information from the first terminal device, the network device determines whether a quantity of streams of interference data whose detection and elimination are supported by the first terminal device is consistent with that in a MU scheduling policy expected by the network device. For example, whether a quantity of streams of MU interference data expected to be scheduled (for example, if the network device expects to perform pairing transmission between two terminal devices and expects to schedule four streams of data for each terminal device, for the first terminal device, a quantity of interference data streams is four) exceeds a quantity of streams of interference whose detection is supported by the first terminal device. If the quantity of streams of MU interference data expected to be scheduled is consistent with the quantity of streams of interference whose detection is supported by the first terminal device, the network device configures, for the first terminal device, the related configuration information. If the quantity of streams of MU interference data expected to be scheduled is inconsistent with the quantity of streams of interference whose detection is supported by the first terminal device, no subsequent step is performed. Alternatively, the network device estimates whether an SNR of a signal meets a needed interval of the first terminal device after beamforming is performed on a channel in an area of the network device. If the needed interval is met, the network device configures, for the first terminal device, the related configuration information. If the needed interval is not met, it may be considered that the network device does not support interference elimination assistance for the first terminal device, and a subsequent step may not be performed.

Optionally, the configuration information may be predefined in a standard for implementation. When the configuration information is predefined in the standard, a determining condition needs to be further defined. For example, when the quantity of streams of interference whose detection is supported by the first terminal device is less than a threshold, the modulation order of interference whose detection is supported by the first terminal device is less than a modulation order, or an SNR interval is not within a predefined interval, the network device does not perform the interference elimination assistance for the first terminal device, and a subsequent step may not be performed.

Optionally, after the network device obtains the first information of the first terminal device, the network device may further send second indication information to the first terminal device. The second indication information indicates the first terminal device to send movement status information of the first terminal device to the network device, and the network device determines, based on the movement status information of the first terminal device, whether to send the first indication information to the first terminal device. As shown in the method in FIG. 3, the method further includes the following steps.

S330: The network device sends the second indication information to the first terminal device.

Correspondingly, the first terminal device receives the second indication information from the network device.

The second indication information indicates the first terminal device to send a movement status of the first terminal device to the network device. In an example, the second indication information may be implemented by using the following code:

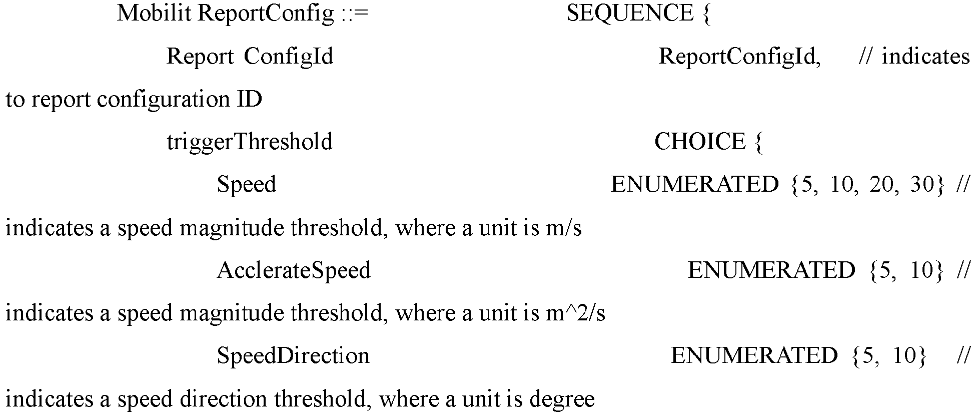

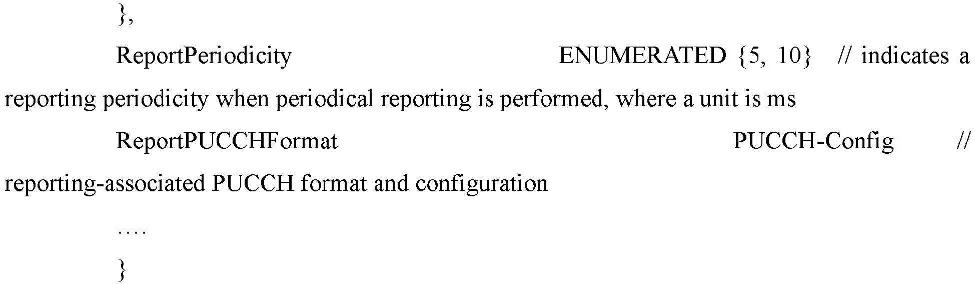

The second indication information may be configured by using RRC, and has an information element related to reporting of the movement status (for example, a MobilityReportConfig information element in the foregoing code). The information element may include a trigger condition and a reporting manner that are configured by the network device and that are for reporting the movement status.

The second indication information may include a reporting manner that is of second information and that is configured by the network device, for example, a configured MAC CE used for reporting, a configured format of reported UCI, and a configured time-frequency domain location of a physical resource used for reporting. (For example, as shown in the foregoing code, all of the foregoing content is not necessarily configured, and the network device may configure only a part of the content.)

When the first terminal device receives the second indication information from the network device, the first terminal device detects the movement status of the first terminal device based on the second indication information, and determines the second information based on the movement status. The second information indicates the movement status of the first terminal device. There are many manners in which the first terminal device detects the movement status of the first terminal device. For example, the first terminal device determines the movement status of the first terminal device by detecting a change status of a sensor like an accelerometer. Alternatively, the first terminal device determines the movement status of the first terminal device by detecting a change status of a signal strength. Alternatively, the first terminal device determines the movement status of the first terminal device in a manner like detecting a signal and further performing Doppler shift estimation. This is not limited in this application.

It should be noted that the second indication information received by the first terminal device and the configuration information in step S320 may be sent by the network device in a same piece of information, or may be divided into different pieces of information and separately sent by the network device. This is not limited in this application.

S340: The first terminal device sends the second information to the network device.

Correspondingly, the network device receives the second information from the first terminal device.

Specifically, after the first terminal device receives the second indication information from the network device, the first terminal device determines, based on the second indication information, the second information indicating the movement status of the first terminal device. The first terminal device sends the second information to the network device.

The movement status includes a speed, an acceleration, and a movement posture.

The speed and the acceleration include a magnitude and a direction, where the direction may use a world coordinate system as a reference. For detailed descriptions, refer to step S220 in FIG. 2. Details are not described herein again.

It should be noted that the first terminal device may determine the second information based on the second indication information of the network device, and send the second information to the network device. Alternatively, the first terminal device may periodically send the second information to the network device (for example, this is specified in a protocol of the first terminal device or is predefined). Alternatively, the first terminal device may send the second information to the network device based on a trigger condition (for example, when determining that a movement speed of the first terminal device is greater than or equal to a threshold, the first terminal device sends the second information to the network device). The second information determined by the first terminal device may be different speed levels, direction intervals, speed magnitudes, and the like. Alternatively, the second information may be a status value, for example, 0/1, or True/False, to indicate whether a reporting condition of the second information is met. A specific content form of the movement status of the first terminal device in the second information specifically sent by the first terminal device to the network device is not limited in this application.

In an example, when the first terminal device sends the second information to the network device based on a trigger condition, the network device may indicate the first terminal device to send the second information on a PUCCH or a PUSCH carrying UCI information, or send the second information in, for example, a MAC CE signaling form. FIG. 4 shows an example in which the network device configures a reporting format (for example, an arrangement order of bit information) when the second information is sent on the PUSCH carrying the UCI information. As shown in FIG. 5, when the second information is carried in the MAC CE signaling for sending, the network device defines a new MAC CE format. The new MAC CE format is used by the first terminal device to send the movement status to the network device. The new MAC CE format may carry several bytes. In addition, content such as a movement speed magnitude, a movement direction, and a movement acceleration magnitude of the first terminal device may be carried.

S350: The network device sends the first indication information to the first terminal device.

Correspondingly, the first terminal device receives the first indication information from the network device.

The first indication information is used by the first terminal device to detect and eliminate the interference signal.

Optionally, the network device determines, based on the first information sent by the first terminal device, whether to send the first indication information to the first terminal device.

The network device determines, based on the capability of the first terminal device to detect the interference signal based on the AI model and that is in the first information, whether to send the first indication information to the first terminal device. When the network device determines that an interference signal that exists at a current phase can be detected and eliminated by using the capability of the first terminal device to detect the interference signal, the network device sends the first indication information to the first terminal device. When the network device determines that an interference signal that exists at a current phase cannot be detected and eliminated by using the capability of the first terminal device to detect the interference signal, in other words, when the first terminal device does not have the capability of detecting and eliminating an interference signal at the current phase, the network device does not send the first indication information to the first terminal device.

Optionally, the network device determines, based on the first information and the second information that are sent by the first terminal device, whether to send the first indication information to the first terminal device.

When the network device determines that the interference signal that exists at the current phase can be detected and eliminated by using the capability of the first terminal device to detect the interference signal, the network device then determines, based on the movement status of the first terminal device, whether to send the first indication information to the first terminal device.

Specifically, the second information sent by the first terminal device includes the speed, the acceleration, the movement direction, and the movement posture of the terminal device. The network device determines whether the movement status in the second information meets a first condition. When the second information meets the first condition, the network device sends the first indication information to the first terminal device. When the second information does not meet the first condition, no subsequent step is performed.

Optionally, the first condition includes at least one of the following: a movement speed feature of the first terminal device meets a preset speed feature; and a movement posture feature of the first terminal device meets a preset posture feature, where the movement speed feature includes a speed magnitude, a speed direction, an acceleration magnitude, and an acceleration direction.

In an example, when the first condition is that the movement speed feature of the first terminal device meets the preset speed feature, the preset speed feature is that the speed magnitude is greater than or equal to a first threshold. When the speed magnitude in the second information of the first terminal device is greater than or equal to the first threshold, the movement speed feature of the first terminal device meets the preset speed feature. When the speed magnitude in the second information of the first terminal device is less than the first threshold, the movement speed feature of the first terminal device does not meet the preset speed feature.

In another example, when the first condition is that the movement speed feature of the first terminal device meets the preset speed feature, the preset speed feature is that the movement direction is a first direction (the world coordinate system is used as a reference). When the movement direction in the second information of the first terminal device is the first direction, the movement speed feature of the first terminal device meets the preset speed feature. When the movement direction in the second information of the first terminal device is a direction other than the first direction, the movement speed feature of the first terminal device does not meet the preset speed feature.

Optionally, in some embodiments, after the first terminal device receives the first indication information from the network device, the method shown in FIG. 3 may further include the following step.

S360: The first terminal device detects and eliminates the interference signal based on the first indication information.

It should be understood that when the network device includes the first indication information in an existing DCI field, to send the first indication information to the first terminal device, the first terminal device obtains the first indication information in the first DCI field based on the first DCI field in the received configuration information or the identifier of the first DCI field, and selects, based on the first indication information, a corresponding AI model to detect and eliminate the interference signal.

In an example, after detecting a DCI field by using a C-RNTI, the first terminal device obtains the TB2 field, and further obtains the first indication information through parsing. The first indication information may include one or more of the following: an antenna port of a second terminal device, a quantity of second terminal devices, a quantity of interference data streams of the second terminal device, a signal modulation scheme of the second terminal device, and a transmit power received by the second terminal device from the network device. Further, the first terminal device detects and eliminates the interference signal based on the first indication information. There may be a plurality of AI models that can be used by the first terminal device to detect and eliminate the interference signal. For different quantities of interference signals detected by the first terminal device and different modulation orders of the interference signal, the first terminal device may further select different AI models. For example, when the first indication information indicates that the quantity of interference signals of the first terminal device is 1, and the modulation order of the interference signal is 16QAM, the first terminal device selects an AI model #1 based on content in the first indication information. When the first indication information indicates that the quantity of interference signals of the first terminal device is 2, and the modulation order of the interference signals is [QPSK, 16QAM], the first terminal device selects an AI model #2 based on specific content in the first indication information.

It should be noted that a specific AI model used by the first terminal device to detect and eliminate the interference signal is determined by the first terminal device. The AI model used by the first terminal device to detect and eliminate the interference signal may be implemented in a plurality of manners, for example:

### Manner 1: Data-driven AI model

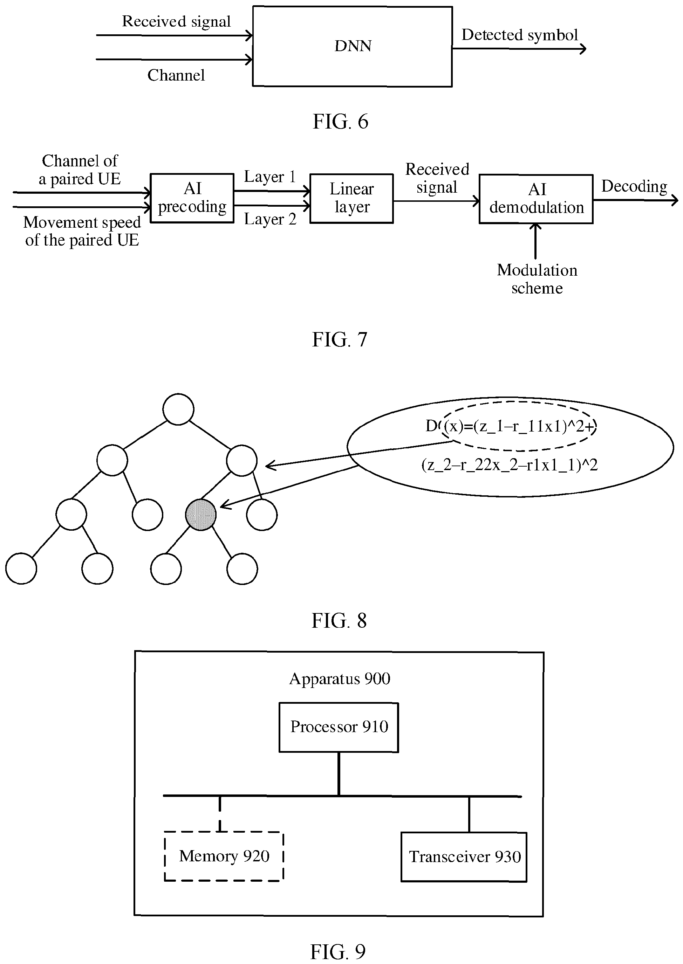

Based on the data-driven AI model, an input of the AI model may be received data, an estimated channel, and a modulation order. An output may be a demodulated signal, for example, a wanted signal of the first terminal device (that is, transmission data sent by a base station to the first terminal device). As shown in FIG. 6, this network structure may be implemented by a network like a DNN including a fully connected layer and a CNN including a convolutional layer. This is not limited in this application. Training of the AI model may be completed by the first terminal device based on data such as a signal, a channel, and modulation information received by the first terminal device, and the network device does not participate in the training of the AI model.

### Manner 2: Theoretical model-driven AI model

In the theoretical model-based AI model, the AI model may be combined with a conventional MIMO detection algorithm. An input of the AI model may be received data, an estimated channel, and a modulation order. The AI model is different from the data-driven AI model, and an output of the AI model may be an intermediate variable in a conventional receiving algorithm. For example, the output of the AI model may be a heuristic function value of an optimal receiving algorithm in likelihood detection, and the like. The first terminal device performs interference detection and elimination based on the optimal receiving algorithm in combination with the heuristic value obtained through calculation by using the AI model, to reduce complexity of the optimal receiving algorithm and improve operation efficiency.

This application provides the foregoing two AI models as examples for detailed description. It is clear that there is an implementation of another AI model. This is not limited.

Further, the first terminal device eliminates the interference signal based on the AI model, further performs demapping and demodulation, and inputs a processed signal to a subsequent channel decoder to perform a subsequent operation.

Example 1 in FIG. 3 mainly describes the following: When the capability of the first terminal device to detect the interference signal is the capability of detecting the interference signal based on the AI model, the AI model is determined by the first terminal device, and the network device sends the first indication information to the first terminal device. The first indication information indicates data transmission information of the second terminal device paired with the first terminal device. In addition, the network device determines, based on the first information of the first terminal device, whether the first terminal device has the capability of detecting and eliminating the interference signal.

Example 2: The capability of the first terminal device to detect the interference signal is the capability of detecting the interference signal based on the AI model, and/or a capability that is based on an AI model supported by the first terminal device for interference detection. The AI model is configured by a network device, or the AI model is a joint AI model obtained through joint training by the first terminal device and the network device.

S310': The first terminal device sends first information to the network device.

Correspondingly, the network device receives the first information from the first terminal device.

Optionally, the first information includes one or more of the following: maximum complexity that is of an AI model and that is supported by the first terminal device, a storage upper limit that is of the AI model and that is supported by the first terminal device, an operator that is of the AI model and that is supported by the first terminal device, and a quantity of neural network layers of the AI model that are supported by the first terminal device.

Optionally, the first information may further include one or more of the following: whether the first terminal device supports interference detection that is based on the artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

It should be understood that the AI model used by the first terminal device in Example 2 may be configured by the network device. The AI model configured by the network device includes two forms.

Form 1 is a single-module AI model. In other words, the single-module AI model is used only for AI interference detection and does not integrate another function. An input of the single-module AI model may be a channel, a received signal, information about the second terminal device, or the like, and an output is a wanted signal of the first terminal device and an intermediate variable of a conventional algorithm (for example, as shown in the detailed example of the first information in step S310 in Example 1 in FIG. 3). The AI model is similar to an AI model implemented by the first terminal device.

Form 2 is a multi-module AI model. In other words, the AI model is obtained through joint training with a plurality of different functional modules (for example, obtained through joint precoding on a network device side). In an example, the multi-module AI model is shown in FIG. 7. An input of the AI model is channels (including channels of the first terminal device and a second terminal device) of a plurality of paired terminal devices obtained by the network device. A precoding operation may be completed through a linear layer in the multi-module AI model, so that AI demodulation may also be a part of the joint training of the AI model. In this way, a cross-module AI model is obtained, thereby further improving system performance.

The network device may configure a model of a demodulation part in the AI model for the first terminal device. In this way, after receiving a signal, the first terminal device uses the signal of the first terminal device as a part of data in the multi-module AI model, and inputs the signal to a subsequent network to complete a demodulation operation.

Based on the single-module AI model and the multi-module AI model in the foregoing two forms, the first terminal device sends capability-related information of the AI model to the network device. Information content of the single-module AI model may also be different from that of the multi-module AI model. Because the AI model is configured by the network device for the first terminal device, the first terminal device needs to first send a requirement on a maximum capability of the AI model to the network device. The capability of the AI model may be FLOPS or the like. An AI network capability is not limited in this application. The first terminal device determines, based on a configuration of the network device, an AI model that matches the configuration of the network device.

It should be understood that when the first terminal device determines that the single-module AI model is supported, the network device may configure only an AI model used for detection, and configure input and output content of the AI model. In this case, an input of the AI model is content such as an estimated channel and a received signal of the first terminal device. An output of the AI model is a detected signal or an intermediate variable of a conventional algorithm, and an implementation algorithm of the first terminal device may still be used for an operation such as another step (for example, channel estimation).

It should be further understood that when the first terminal device supports the multi-module AI model, the first terminal device sends, to the network device, a multi-module capability supported by the first terminal device. The capability may include: supporting an AI module combined with the network device, supporting an AI model combined with the network device and supporting a function that is included in the model and that is of another module like a channel estimation module of the first terminal device, and the like. Different multi-module capabilities affect the input and output of the AI model. For example, when the first terminal device supports the AI model combined with the network device, the input of the AI model may be a received signal, a pilot location, or the like, and the output of the AI model may be demodulated data. The multi-module AI model does not need to perform an operation like channel estimation.

S320': The network device sends configuration information to the first terminal device.

Correspondingly, the first terminal device receives the configuration information from the network device.

The configuration information includes a first DCI field and/or an identifier of the first DCI field.

The network device determines the first DCI field. For example, the network device uses a DCI1_1 format, and redefines a dedicated indication field to carry first indication information. Particularly, the network device may modify an existing DCI field to increase a length of an existing format. The network device uses the dedicated DCI field, instead of reusing the existing DCI field, to carry the first indication information. The first terminal device parses the first indication information in the dedicated DCI field based on the configuration information. Complexity of detecting the DCI field by the first terminal device is not affected.

After receiving the first information from the first terminal device, the network device configures the AI model based on a capability that is of the first terminal device to detect the interference signal based on the AI model and that is in the first information and/or a capability that is of the AI model used for interference detection and that is supported in the first information.

Optionally, when the AI model in the first information sent by the first terminal device to the network device supports a single module, and the first information includes a maximum model capability supported by the AI model, the network device may configure, for the first terminal device, an AI model used only for MIMO detection. The AI model matches an AI model capability sent by the first terminal device. When configuring the AI model, the network device further configures both an input and an output of the AI model, so that the first terminal device learns how to use the AI model configured by the network device. The network device may indicate the input and the output of the AI model to the first terminal device by using dedicated indication information (for example, configuration indication information of the AI model), or determine the input and the output of the AI model in a predefined manner.

Optionally, when the AI model in the first information sent by the first terminal device to the network device supports a plurality of modules, the network device may configure, for the first terminal device, a model of a detection part in the jointly trained AI model, and further configure or indicate the input and the output of the AI model to the first terminal device.

It should be understood that when configuring the AI model for the first terminal device, the network device may configure a plurality of AI models. The first terminal device may use different AI models in different interference cases. The network device may further configure an association relationship between different AI models and interference assistance information in the first indication information. For example, an AI model #1 is associated with indicating two streams of interference signals, and the like. In other words, when the first terminal device determines that the interference signal is two streams of interference signals, the first terminal device selects an AI network #1 to detect and eliminate the interference signal.

S330': The network device sends second indication information to the first terminal device.

Correspondingly, the first terminal device receives the second indication information from the network device.

It should be further understood that the network device may send the second indication information to the first terminal device, where the second indication information indicates the first terminal device to periodically send or to be triggered to send a movement status of the first terminal device to the network device. In other words, the network device configures, in RRC configuration information, the first terminal device to periodically send or to be triggered to send the movement status of the first terminal device.

When sending the movement status of the first terminal device to the network device, the first terminal device may send the movement status of the first terminal device on a PUCCH, or may send the movement status of the first terminal device on a PUSCH.

S340': The first terminal device sends second information to the network device.

Correspondingly, the network device receives the second information from the first terminal device.

Specifically, after the first terminal device receives the second indication information from the network device, the first terminal device determines, based on the second indication information, the second information indicating the movement status of the first terminal device. The first terminal device sends the second information to the network device.

The movement status includes a speed, an acceleration, and a movement posture.

Step S330' and step S340' are similar to steps S330 and S340 in Example 1. Details are not described herein again.

S350': The network device sends the first indication information to the first terminal device.

Correspondingly, the first terminal device receives the first indication information from the network device.

Optionally, the network device may determine the first indication information based on the first information and the second information of the first terminal device.

Optionally, the network device determines the first indication information based on the capability that is of the first terminal device to detect the interference signal based on the AI model and that is in the first information sent by the first terminal device. The first indication information is carried in the first DCI field and sent to the first terminal device.

The network device determines the first indication information based on the first information of the first terminal device. For a detailed example, refer to step S350 in the foregoing Example 1.

Specifically, the second information sent by the first terminal device includes the speed, the acceleration, the movement direction, and the movement posture of the first terminal device. The network device determines whether the movement status in the second information meets a first condition. When the second information meets the first condition, the network device sends the first indication information to the first terminal device. When the second information does not meet the first condition, the network device does not need to perform a subsequent operation.

Optionally, the first condition includes at least one of the following: a movement speed feature of the first terminal device meets a preset speed feature; and a movement posture feature of the first terminal device meets a preset posture feature, where the movement speed feature includes a speed magnitude, a speed direction, an acceleration magnitude, and an acceleration direction.

Optionally, in a case of the single-module AI model, based on the movement status in the second information sent by the first terminal device, the network device determines a MU pairing status and further determines whether to send the first indication information to the first terminal device. When the network device determines to send the first indication information to the first terminal device, the first indication information is carried in the first DCI field and sent to the first terminal device.

Optionally, in a case of a joint-module AI model, the network device inputs the second information of the first terminal device and a measured channel into the joint AI model, to obtain precoding, and performs transmission based on the precoding. In this case, the movement status (that is, the second information) of the first terminal device may be used as the input of the AI model.

It should be understood that when the network device has a precoding AI model instead of a joint AI model demodulated by the network device and the first terminal device, the network device may also perform AI precoding based on the movement status in the second information sent by the first terminal device.

S360': The first terminal device detects and eliminates the interference signal based on the first indication information.

It should be understood that when the network device includes the first indication information in the first DCI field, to send the first indication information to the first terminal device, the first terminal device obtains the first indication information in the first DCI field based on the first DCI field in the received configuration information or the identifier of the first DCI field, and selects, based on the first indication information, a corresponding AI model to detect and eliminate the interference signal.

It should be understood that the first terminal device may select the corresponding AI model based on an association relationship between a configured AI model and different interference assistance information during AI model configuration.

It should be further understood that the first indication information may further include an AI model that the network device expects the first terminal device to use, for example, as shown in the following Table 6. The first terminal device directly determines, based on the first indication information, the AI model that needs to be used.

**Table 6**

| Interference information indication index | Interference quantity, interference modulation scheme, and used AI model |
|---|---|
| 0 | SU-MIMO |
| 1 | MU 1 BPSK Used AI model 1 |
| ... | ... |
| 155 | MU 1 256QAM, MU 2 256QAM, MU 3 256QAM, and used AI model 2 |
| 156 to 255 | Reserved |

The first terminal device selects different AI models to detect the interference signal, and inputs and outputs of the AI models may also be different. The input and the output of the AI model may be configured by the network device, or the first terminal device may determine an input and an output of a corresponding AI model based on a configuration of the network device.

It should be further understood that step S360' is similar to step S360 in Example 1. To avoid redundancy, details are not described herein again.

In the foregoing Example 2, the jointly trained AI model is used. The first terminal device further selects, based on the configuration of the network device, a proper AI model for detecting and eliminating the interference signal. The first terminal device sends the first information to the network device, where the first information includes a capability of the AI model of the first terminal device. The network device may configure the joint-module AI model based on the first information, so that the AI model is used by the first terminal device to detect and eliminate the interference signal. In this way, system performance is improved.

Example 3: The capability of the first terminal device to detect the interference signal is the capability of detecting the interference signal based on the likelihood algorithm.

S310": The first terminal device sends first information to a network device.

Correspondingly, the network device receives the first information from the first terminal device.

Optionally, the first information further includes one or more of the following: whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

The maximum complexity that is of the interference detection and that is supported by the first terminal device may be a quantity of nodes whose detection is supported by sphere decoding and a detection radius, may be a quantity of nodes whose detection is supported by a QR decomposition (QRD) algorithm, or may be an upper limit value of a quantity of operation times.

The sphere decoding is used as an example. It should be understood that the sphere decoding is a tree-based detection manner. Continuous extension starts from a root node of a detection tree, and a distance between a current node and the root node is calculated on each extended node. A manner of calculating the distance is shown in FIG. 8.

For example, as shown in FIG. 8, a distance D between a dark gray node and the root node is D(x)=(z_1-r_11x1)^2+(z_2-r_22x_2-r1x1_1)^2, and a distance between a previous node of the dark gray node and the root node is (z_1-r_11x1)^2.

It may be learned that complexity of the sphere decoding depends on a quantity of nodes that need to be extended. A larger quantity of extended nodes indicates a larger quantity of calculation times. Complexity of interference detection in the first information sent by the first terminal device may be a maximum quantity of nodes whose detection is supported. The quantity of nodes may be used by the network device to estimate a potential upper limit of the complexity of the interference detection, to avoid system performance deterioration caused by excessively high complexity of detecting and eliminating the interference signal by the first terminal device during MU scheduling.

It should be understood that the first information may further include a quantity of first terminal devices that are supported by the first terminal device in interference detection and elimination based on the sphere decoding, and a quantity of streams of an interference signal whose detection and elimination are supported by the first terminal device based on the sphere decoding. Generally, the sphere decoding is actually applicable to any quantity of streams and any modulation order. However, additional computing costs are needed when interference detection and elimination algorithms are considered. Therefore, when the sphere decoding is used to eliminate interference, a limitation on parameters such as a quantity of streams and a modulation order of interference signals may also be provided, and the limitation on the parameters is used to control complexity of the sphere decoding. For example, the limitation is that a sphere decoding algorithm supports elimination of two streams of interference signals, and the two streams of interference may be eliminated for 16QAM.

The limitation on the quantity of streams and the modulation order of the interference signals can also avoid high power consumption of the terminal device caused by the excessively high complexity of detecting the interference signal by the first terminal device during the MU scheduling.

The complexity of the sphere decoding is related to a quantity of streams of signals that need to be demodulated by the first terminal device and a data modulation order. Further, a limitation on the complexity of the sphere decoding may be a specific complexity upper limit (for example, described by using a quantity of operations such as FLOPS), or may be different level values, where approximate ranges of the different level values are predefined between the network device and the first terminal device, or may be a specific value of a quantity of signals supported in interfering with the first terminal device, where the value may also be represented as different levels. Alternatively, a limitation on the complexity of the sphere decoding may be different modulation orders, may be an explicit modulation order or a modulation order set, or may be an index of a modulation order set, where the modulation order set needs to be predefined between the first terminal device and the network device.

It should be noted that, after receiving capability query information of the network device, the first terminal device may send the first information to the network device based on the capability query information of the network device, or may periodically send or be triggered to send the first information to the network device according to a protocol specification.

S320": The network device sends configuration information to the first terminal device.

Correspondingly, the first terminal device receives the configuration information from the network device.

The configuration information includes a first DCI field and/or an identifier of the first DCI field.

This step is similar to step S220 in FIG. 2 and step S320 in Example 1 in FIG. 3. For details, refer to descriptions of step S220 in FIG. 2 and step S320 in Example 1 in FIG. 3. Details are not described herein again.

S330": The network device sends second indication information to the first terminal device. In other words, the first terminal device receives the second indication information from the network device.

The second indication information indicates the first terminal device to send a movement status of the first terminal device to the network device.

This step is similar to step S330 in Example 1 in FIG. 3. For detailed descriptions, refer to the descriptions of step S330 in Example 1.

S340": The first terminal device sends second information to the network device.

Correspondingly, the network device receives the second information from the first terminal device.

The movement status includes a speed, an acceleration, and a movement posture.

This step is similar to step S340 in Example 1 in FIG. 3. For detailed descriptions, refer to the descriptions of step S340 in Example 1.

S350": The network device sends first indication information to the first terminal device.

Correspondingly, the first terminal device receives the first indication information from the network device.

The first indication information indicates data transmission information of a second terminal device, and the second terminal device is a terminal device paired with the first terminal device.

Optionally, the first indication information is further used by the first terminal device to detect and eliminate the interference signal.

For example, the network device indicates the first indication information in a TB2 field, and scrambles, by using an RNTI2, DCI corresponding to the first DCI field.

After demodulating the DCI based on the RNTI2 and obtaining the first DCI field, the first terminal device obtains the first indication information. As shown in the method in FIG. 3, the method further includes the following step.

S360": The first terminal device detects and eliminates the interference signal based on the first indication information.

For example, the first terminal device performs demodulation based on the first indication information by using the sphere decoding.

It should be understood that, because a likelihood detection algorithm such as the sphere decoding is applicable to a case in which powers of different data streams are balanced. If powers of some data streams and/or interference streams are low or even lower than a noise level, the interference streams may not be correctly detected. As a result, detection of a target data stream is affected. Therefore, before sphere decoding detection is used, a channel condition on each interference antenna port may be further determined. For example, the first terminal device may measure an interference channel based on an antenna port that is of the second terminal device and that is indicated by the network device, and the first terminal device further calculates energy of the interference channel or a ratio of the interference channel to noise. If the energy of the interference channel is low or the ratio of the interference channel to the noise is low, an interference signal corresponding to the port may be considered as the noise and does not participate in detection.

In an example, the network device indicates three streams of interference data. When it is detected that channel energy of an interference stream 2 or a ratio of a channel of an interference stream 2 to interference is less than a threshold, the interference stream 2 may be considered as the noise, and only an interference stream 1 and an interference stream 3 are demodulated. Therefore, the first terminal device needs to eliminate only interference from the interference stream 1 and the interference stream 3. The threshold may be determined and implemented by the first terminal device, or may be indicated to the first terminal device in another manner. This is not limited in this application.

In the method shown in Example 3 in FIG. 3, the first information sent by the first terminal device to the network device includes the capability of the first terminal device to detect and eliminate the interference signal based on the likelihood algorithm. This reduces complexity of detecting the interference signal by the first terminal device. In addition, the network device sends the first indication information to the first terminal device, where the first indication information includes interference elimination assistance information, to help the first terminal device detect and eliminate the interference signal when interference is strong. This reduces the complexity of detecting and eliminating the interference signal by the first terminal device. In addition, an existing DCI field is reused, to further reduce signaling overheads on an air interface.

In FIG. 3, three examples are respectively listed to describe in detail three cases in which the first terminal device sends, to the network device, the first information indicating the capability that is of the first terminal device to detect the interference signal and that is in multi-user multiple-input multiple-output MU-MIMO pairing transmission. In the three examples, the first terminal device reports the capability of the first terminal device to detect the interference signal. After receiving the capability of the first terminal device to detect the interference signal, the network device sends the first indication information to the first terminal device. The first indication information indicates the data transmission information of the terminal device paired with the first terminal device. The first indication information may be further used to detect the interference signal. This avoids a waste of a related control channel resource and system performance deterioration caused by a case in which when the first terminal device does not have the capability of detecting the interference signal, the network device sends a related indication to the first terminal device, and the first terminal device cannot well detect and eliminate the interference signal. In addition, the network device reuses the existing DCI field to send the first indication information to the first terminal device. This reduces resource overheads and reduces demodulation complexity of the first terminal device.

Sequence numbers of the foregoing processes do not mean execution sequences in the foregoing method embodiments. The execution sequences of the processes should be determined based on functions and internal logic of the processes, and should not be construed as any limitation on the implementation processes of embodiments of this application. In addition, it is possible that not all operations in the foregoing method embodiments need to be performed.

It should be understood that the first terminal device and/or the network device in the foregoing method embodiments may perform some or all of the steps in embodiments. These steps or operations are merely examples. In embodiments of this application, other operations or variants of the various operations may be further included.

It should be further understood that, in embodiments of this application, unless otherwise stated or there is a logic conflict, terms and/or descriptions in different embodiments may be consistent and may be mutually referenced, and technical features in different embodiments may be combined based on an internal logical relationship thereof, to form a new embodiment.

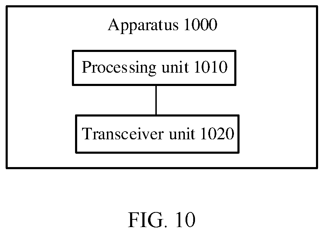

The foregoing describes in detail the multi-user data transmission method provided in embodiments of this application with reference to FIG. 2 to FIG. 8. The following describes in detail a multi-user data transmission apparatus provided in embodiments of this application with reference to FIG. 9 and FIG. 10.

The following describes, in detail with reference to FIG. 9 and FIG. 10, a multi-user data transmission apparatus provided in embodiments of this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit-end device or a receive-end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 9 is a block diagram of an example of an information transmission device 900 according to this application. Any device in either method in FIG. 2 and FIG. 3, for example, the first terminal device and the network device, may be implemented by the multi-user data transmission device shown in FIG. 9.

It should be understood that the information transmission device 900 may be a physical device, a component (for example, an integrated circuit or a chip) of the physical device, or a functional module in the physical device.

As shown in FIG. 9, the multi-user data transmission device 900 includes one or more processors 910. Optionally, the processor 910 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to perform signal transmission or transfer.

Optionally, the interface may be implemented by a transceiver. Optionally, the information transmission device 900 may further include a transceiver 930. The transceiver 930 may also be referred to as a transceiver unit, a transceiver machine, a transceiver circuit, or the like, and is configured to implement a transceiver function.

Optionally, the multi-user data transmission device 900 may further include a memory 920. A specific deployment location of the memory 920 is not specifically limited in this embodiment of this application. The memory may be integrated into the processor, or may be independent of the processor. If the multi-user data transmission device 900 does not include the memory, the multi-user data transmission device 900 only needs to have a processing function, and the memory may be deployed in another location (for example, a cloud system).

The processor 910, the memory 920, and the transceiver 930 communicate with each other through an internal connection path, to transfer a control signal and/or a data signal.

It may be understood that although not shown, the multi-user data transmission device 900 may further include another apparatus, for example, an input apparatus, an output apparatus, or a battery.

Optionally, in some embodiments, the memory 920 may store execution instructions used to perform the method in embodiments of this application. The processor 910 may execute the instructions stored in the memory 920 and complete, in combination with other hardware (for example, the transceiver 930), the steps performed in the following method. For specific working processes and beneficial effects, refer to descriptions in the foregoing method embodiments.

The method disclosed in embodiments of this application may be applied to the processor 910, or may be implemented by the processor 910. The processor 910 may be an integrated circuit chip with a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 920 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example and not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

FIG. 10 is a block diagram of a multi-user data transmission apparatus 1000 according to this application.

Optionally, a specific form of the multi-user data transmission apparatus 1000 may be a general-purpose computer device or a chip in the general-purpose computer device. This is not limited in this embodiment of this application. As shown in FIG. 10, the multi-user data transmission apparatus includes a processing unit 1010 and a transceiver unit 1020.

Specifically, the multi-user data transmission apparatus 1000 may be any device in this application, and may implement a function that can be implemented by the device. It should be understood that the multi-user data transmission apparatus 1000 may be a physical device, a component (for example, an integrated circuit or a chip) of the physical device, or a functional module in the physical device.

In a possible design, the multi-user data transmission apparatus 1000 may be the first terminal device (for example, the first terminal device 120) in the foregoing method embodiments, or may be a chip configured to implement a function of the first terminal device (for example, the first terminal device 120) in the foregoing method embodiments.

For example, the transceiver unit is configured to send first information to a network device, where the first information indicates a capability that is of the first terminal device to detect an interference signal and that is in multi-user multiple-input multiple-output MU-MIMO pairing transmission. The transceiver unit is further configured to receive first indication information from the network device, where the first indication information indicates data transmission information of a second terminal device, and the second terminal device is a terminal device paired with the first terminal device.

It should be further understood that when the multi-user data transmission apparatus 1000 is the first terminal device (for example, the first terminal device 120), the transceiver unit 1020 in the multi-user data transmission apparatus 1000 may be implemented through a communication interface (for example, a transceiver or an input/output interface). The processing unit 1010 in the multi-user data transmission apparatus 1000 may be implemented by at least one processor, for example, may correspond to the processor 910 shown in FIG. 9.

Optionally, the multi-user data transmission apparatus 1000 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein.

In another possible design, the multi-user data transmission apparatus 1000 may be the network device (for example, the network device 110) in the foregoing method embodiments, or may be a chip configured to implement a function of the network device (for example, the network device 110) in the foregoing method embodiments.

For example, the transceiver unit is configured to receive first information from a first terminal device, where the first information indicates a capability that is of the first terminal device to detect an interference signal and that is in multi-user multiple-input multiple-output MU-MIMO pairing transmission. The transceiver unit is further configured to send first indication information to the first terminal device, where the first indication information indicates data transmission information of a second terminal device, and the second terminal device is a terminal device paired with the first terminal device.

It should be further understood that when the multi-user data transmission apparatus 1000 is the network device 110, the transceiver unit 1020 in the multi-user data transmission apparatus 1000 may be implemented through a communication interface (for example, a transceiver or an input/output interface), for example, may correspond to the communication interface 930 shown in FIG. 9. The processing unit 1010 in the multi-user data transmission apparatus 1000 may be implemented by at least one processor, for example, may correspond to the processor 910 shown in FIG. 9.

Optionally, the multi-user data transmission apparatus 1000 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments. For brevity, details are not described herein.

In addition, in this application, the multi-user data transmission apparatus 1000 is presented in a form of a functional module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1000 may be in the form shown in FIG. 10. The processing unit 1010 may be implemented by the processor 910 shown in FIG. 9. Optionally, if the computer device shown in FIG. 9 includes the memory 920, and the processing unit 1010 may be implemented by using the processor 910 and the memory 920. The transceiver unit 1020 may be implemented by the transceiver 930 shown in FIG. 9. The transceiver 930 includes a receiving function and a sending function. Specifically, the processor is implemented by executing a computer program stored in the memory. Optionally, when the apparatus 1000 is a chip, a function and/or an implementation process of the transceiver unit 1020 may alternatively be implemented through a pin, a circuit, or the like. Optionally, the memory may be a storage unit in the chip, for example, a register or a cache. Alternatively, the storage unit may be a storage unit that is in the multi-user data transmission apparatus and that is located outside the chip, for example, the memory 920 shown in FIG. 9, or may be a storage unit that is deployed in another system or device and that is not in the computer device.

Various aspects or features of this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, include and/or carry instructions and/or data.

According to the method provided in embodiments of this application, this application further provides a computer program product. The computer program product includes a computer program or a group of instructions. When the computer program or the group of instructions are run on a computer, the computer is enabled to perform the method in any one of the embodiments shown in FIG. 2 to FIG. 8.

According to the method provided in embodiments of this application, this application further provides a computer-readable storage medium. The computer-readable storage medium stores a program or a group of instructions. When the program or the group of instructions are run on a computer, the computer is enabled to perform the method in any one of the embodiments shown in FIG. 2 to FIG. 8.

Based on the method provided in embodiments of this application, this application further provides a communication system. The communication system includes the foregoing apparatus or device.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process based on a signal having one or more data packets (for example, data from two components interacting with another component in a local system, a distributed system, and/or a network such as the Internet interacting with another system by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In some embodiments according to this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-user data transmission method, wherein the method further comprises:
sending, by a first terminal device, first information to a network device, wherein the first information indicates a capability that is of the first terminal device to detect an interference signal and that is in multi-user multiple-input multiple-output MU-MIMO pairing transmission; and
after the first terminal device sends the first information to the network device, receiving, by the first terminal device, first indication information from the network device, wherein the first indication information indicates data transmission information of a second terminal device, and the second terminal device is a terminal device paired with the first terminal device.

2. The method according to claim 1, wherein when the first information meets a preset condition, the first terminal device receives the first indication information.

3. The method according to claim 1 or 2, wherein the first indication information is determined based on the first information.

4. The method according to any one of claims 1 to 3, wherein the method further comprises:
detecting, by the first terminal device, a multi-user interference signal in the MU-MIMO pairing transmission based on the first indication information.

5. The method according to any one of claims 1 to 4, wherein the first indication information is carried in a first downlink control information DCI field, and the method further comprises:
determining, by the first terminal device, the first DCI field based on configuration information, wherein the configuration information comprises the first DCI field and/or an identifier of the first DCI field.

6. The method according to claim 5, wherein the method further comprises:
receiving, by the first terminal device, the configuration information from the network device.

7. The method according to any one of claims 1 to 6, wherein before the receiving, by the first terminal device, first indication information from the network device, the method further comprises:
sending, by the first terminal device, second information to the network device, wherein the second information indicates a movement status of the first terminal device, and the movement status comprises one or more of a speed, an acceleration, and a movement posture.

8. The method according to claim 7, wherein before the sending, by the first terminal device, second information to the network device, the method further comprises:
receiving, by the first terminal device, second indication information from the network device, wherein the second indication information indicates the first terminal device to send the movement status of the first terminal device to the network device.

9. The method according to any one of claims 1 to 8, wherein the first information comprises one or more of the following:
whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

10. The method according to any one of claims 1 to 8, wherein the first information comprises one or more of the following:
whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

11. The method according to any one of claims 1 to 8, wherein the first information comprises one or more of the following:
maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

12. The method according to any one of claims 5 to 11, wherein the configuration information further comprises an AI model.

13. The method according to claim 12, wherein the first indication information comprises at least one of the following:
an antenna port of the second terminal device, a quantity of second terminal devices, a quantity of interference data streams of the second terminal device, a signal modulation scheme of the second terminal device, and a transmit power received by the second terminal device from the network device.

14. A multi-user data transmission method, comprising:
receiving, by a network device, first information from a first terminal device, wherein the first information indicates a capability that is of the first terminal device to detect an interference signal and that is in multi-user multiple-input multiple-output MU-MIMO pairing transmission; and
after the network device receives the first information, sending, by the network device, first indication information to the first terminal device, wherein the first indication information indicates data transmission information of a second terminal device, and the second terminal device is a terminal device paired with the first terminal device.

15. The method according to claim 14, wherein when the first information meets a preset condition, the network device sends the first indication information to the first terminal device.

16. The method according to claim 14 or 15, wherein the first indication information is determined based on the first information.

17. The method according to any one of claims 14 to 16, wherein the first indication information is carried in a first downlink control information DCI field, and the method further comprises:
sending, by the network device, configuration information to the first terminal device, wherein the configuration information comprises the first DCI field and/or an identifier of the first DCI field.

18. The method according to any one of claims 14 to 17, wherein before the sending, by the network device, first indication information to the first terminal device, the method further comprises:
receiving, by the network device, second information from the first terminal device, wherein the second information indicates a movement status of the first terminal device, and the movement status comprises one or more of a speed, an acceleration, a movement direction, and a movement posture.

19. The method according to claim 18, wherein before the receiving, by the network device, second information from the first terminal device, the method further comprises:
sending, by the network device, second indication information to the first terminal device, wherein the second indication information indicates the first terminal device to send the movement status of the first terminal device to the network device.

20. The method according to any one of claims 17 to 19, wherein before the sending, by the network device, configuration information to the first terminal device, the method further comprises:
determining, by the network device, that the second information meets a first condition.

21. The method according to claim 20, wherein the first condition comprises at least one of the following:
a movement speed feature of the first terminal device meets a preset speed feature; and
a movement posture feature of the first terminal device meets a preset posture feature, wherein
the movement speed feature comprises a speed magnitude, a speed direction, an acceleration magnitude, and an acceleration direction.

22. The method according to any one of claims 14 to 21, wherein the first information comprises one or more of the following:
whether the first terminal device supports interference detection that is based on an artificial intelligence AI model, a quantity of streams of an interference signal that are detectable by the first terminal device based on the AI model, a modulation order that is of an interference signal and that is detectable by the first terminal device based on the AI model, and a range of a signal-to-noise ratio SNR or a signal-to-interference-plus-noise ratio SINR to which the first terminal device is adapted based on the AI model.

23. The method according to any one of claims 14 to 21, wherein the first information further comprises one or more of the following:
whether the first terminal device supports a likelihood detection capability, a quantity of detectable streams of an interference signal that are supported by the first terminal device, a detectable modulation order that is of an interference signal and that is supported by the first terminal device, and maximum complexity that is of interference detection and that is supported by the first terminal device.

24. The method according to any one of claims 14 to 21, wherein the first information comprises one or more of the following:
maximum complexity that is of an AI model and that is supported by the first terminal device, a storage upper limit that is of the AI model and that is supported by the first terminal device, an operator that is of the AI model and that is supported by the first terminal device, a quantity of neural network layers of the AI model that are supported by the first terminal device, and a neural network type that is of the AI model and that is supported by the first terminal device.

25. The method according to any one of claims 17 to 24, wherein the configuration information further comprises an AI model, and the AI model is configured by the network device based on the first information.

26. The method according to any one of claims 14 to 25, wherein the first indication information comprises at least one of the following:
an antenna port of the second terminal device, a quantity of second terminal devices, a quantity of interference data streams of the second terminal device, a signal modulation scheme of the second terminal device, and a transmit power received by the second terminal device from the network device.

27. A multi-user data transmission apparatus, wherein the apparatus comprises a module or unit configured to perform the method according to any one of claims 1 to 13, or a module or unit configured to perform the method according to any one of claims 14 to 26.

28. A communication apparatus, comprising:
a processor, configured to execute a computer program stored in a memory, to enable the communication apparatus to perform the method according to any one of claims 1 to 13, or to enable the apparatus to perform the method according to any one of claims 14 to 26.

29. The apparatus according to claim 28, wherein the apparatus further comprises the memory, and the memory is configured to store the computer program.

30. A computer-readable storage medium, wherein
the computer-readable storage medium stores a computer program, and when the computer program is run, a computer is enabled to perform the method according to any one of claims 1 to 13, or a computer is enabled to perform the method according to any one of claims 14 to 26.

31. A computer program product, wherein when the computer program product is executed on a computer, the computer is enabled to perform the method according to any one of claims 1 to 13, or the computer program product is enabled to perform the method according to any one of claims 14 to 26.

32. A chip, comprising a processor, configured to invoke a computer program from a memory and run the computer program, to enable an apparatus on which the chip is installed to perform the method according to any one of claims 1 to 13 or the method according to any one of claims 14 to 26.
